# FASCICULE DE BREVET EUROPEEN

(11) **EP 1 825 185 B1**
(45) Date de publication et mention de la délivrance du brevet: **02.06.2010**
(21) Numéro de dépôt: 05824524.2
(22) Date de dépôt: 07.12.2005
(51) Int. Cl.: F16L 59/14, F16L 39/00

(54) **PROCÉDÉ D'ISOLATION THERMIQUE DE CONDUITES COAXIALES PAR UN MATÉRIAU ISOLANT PARTICULAIRE, INSTALLATION POUR LA MISE EN OUVRE DU DIT PROCÉDÉ, ÉLÉMENT DE CONDUITES COAXIALES ET CONDUITE**
VERFAHREN ZUR WÄRMEISOLIERUNG VON KOAXIALEN ROHREN MIT EINEM TEILCHENFÖRMIGEN ISOLIERMATERIAL, ANLAGE ZUR DURCHFÜHRUNG DES VERFAHRENS, ELEMENT VON KOAXIALEN ROHREN UND ROHR
METHOD FOR THERMALLY INSULATING COAXIAL PIPES WITH A PARTICULATE INSULATING MATERIAL, INSTALLATION FOR THE REALISATION OF SUCH METHOD, ELEMENT OF COAXIAL PIPES AND PIPE

(30) Priorité: 08.12.2004 FR 0413050
(43) Date de publication de la demande: 29.08.2007
(73) Titulaire: SAIPEM S.A., 78180 Montigny-le-Bretonneux (FR)
(72) Inventeur: CARLIER, Boris, F-78110 Le Vesinet (FR); LANDREAU, Benoit, F-92290 Chatenay Malabry (FR)
(74) Mandataire: Domange, Maxime
(86) Numéro de dépôt international: PCT/FR2005/003062
(87) Numéro de publication internationale: WO 2006/061512

(56) Documents cités:
- WO-A-99/05447

## Description

La présente invention concerne un procédé d'isolation thermique d'un ensemble de conduites coaxiales, notamment des conduites sous-marines véhiculant des fluides chauds ou froids, de préférence des conduites sous-marines destinées aux grandes profondeurs.

Plus particulièrement, la présente invention concerne un procédé d'isolation thermique de l'espace annulaire entre deux conduites coaxiales comprenant une conduite interne et une conduite externe.

La présente invention concerne en particulier l'isolation de telles conduites sous-marines installées sur les champs pétroliers par très grandes profondeurs, ainsi qu'aux conduites de liaison fond-surface en suspension entre le fond de la mer et un navire de surface ancré sur ledit champ pétrolier.

Ces ensembles de conduites coaxiales sont fabriqués par assemblage bout à bout de longueur unitaire ou "éléments de conduites coaxiales" ou encore dénommés ci-après "rames de conduites coaxiales", dont la longueur est en général de 10 à 100 mètres, plus particulièrement d'environ 12, 24 ou 48 mètres chacun(e).

Dans la majorité des domaines industriels on recherche des systèmes d'isolation performants pour maintenir les fluides véhiculés dans les tuyauteries à température constante, de manière à ce que les transferts entre équipements puissent être rendus possibles sur des distances importantes, atteignant par exemple plusieurs centaines de mètres, voire plusieurs kilomètres. De telles distances sont courantes dans les industries telles que les raffineries de pétrole, les installations de gaz naturel liquéfié (-165°C), les champs pétroliers sous-marins lesquels s'étendent sur plusieurs dizaines de kilomètres. De tels champs pétroliers sont développés par des profondeurs d'eau de plus en plus importantes lesquelles peuvent dépasser 3000 m.

De nombreux systèmes ont été développés pour atteindre un haut niveau de performance thermique et des versions spécifiques ont été développées pour répondre de manière plus adaptée aux grands fonds, c'est à dire pour résister à la pression du fond de la mer. En effet, la pression de l'eau étant sensiblement de 0.1 MPa, soit environ 1 bar pour 10m de profondeur, la pression à laquelle doit résister la conduite est alors d'environ 10 MPa, soit environ 100 bars pour 1000m de profondeur et d'environ 30 MPa, soit environ 300 bars pour 3000m.

Les technologies les plus performantes qui ont été développées pour atteindre cet objectif sont les technologies dites "Pipe In Pipe" ou PIP, c'est à dire "conduite dans une conduite", dans laquelle une conduite interne véhicule le fluide et une conduite externe coaxiale à la précédente est en contact avec le milieu ambiant, c'est-à-dire l'eau. L'espace annulaire entre les deux conduites peut être rempli d'un matériau isolant ou encore être vidé de tout gaz.

Dans le cas d'utilisation d'un matériau isolant de type mousse de polyuréthane sous atmosphère gazeuse, les épaisseurs nécessaires de matériau isolant sont en général importantes, par exemple 5 ou 10 cm, ce qui nécessite l'utilisation d'une conduite extérieure de fort diamètre. Or, cette conduite externe doit résister à la pression du fond sans imploser ce qui implique un surcroît de surface d'acier en raison de l'accroissement du diamètre et un surcroît d'épaisseur d'acier pour résister à la pression. De plus, l'espace annulaire rempli de mousse crée une flottabilité supplémentaire que l'on est souvent obligé de compenser par augmentation du poids de la conduite, ladite augmentation étant souvent obtenue par augmentation de l'épaisseur de la conduite externe. Ainsi, bien souvent, le dimensionnement de la conduite externe est dicté par des considérations de non-flottabilité de l'ensemble PIP, plus que par la nécessité de résister à la pression de fond.

Pour palier cet inconvénient, des technologies beaucoup plus performantes ont été développées, dans lesquelles on cherche à minimiser l'espace annulaire entre conduites, en particulier avec la création d'un vide dans la zone intersticielle. En effet le vide ainsi créé est alors un excellent isolant, et un espace annulaire de 10 à 20 mm est suffisant. Le PIP est alors comparable en termes de performances aux "bouteilles thermos" en verre connues de tout un chacun. Pour améliorer l'isolation, on limite en outre le rayonnement en enveloppant la partie externe de la conduite interne d'un film réfléchissant, en général constitué d'un film aluminium éventuellement associé à des matériaux thermoplastiques.

Les conduites sont alors préfabriquées en longueurs unitaires de 12 à 48 m puis, lors de la pose, assemblées les unes aux autres pour former une liaison continue. En cas d'endommagement d'une ou plusieurs longueurs de PIP, il se crée alors des ponts thermiques qui, s'ils restent ponctuels et en nombre limité, n'ont pas de répercussions significatives sur le comportement de la conduite, laquelle continue en général à assurer sa fonction dans le temps.

Après tirage au vide à un niveau de pression absolue très faible, la paroi externe de la conduite interne, ainsi que la paroi interne de la conduite externe continuent de libérer des molécules de gaz. En particulier, la conduite interne, réalisée en général en acier au carbone, peut être sujette à des phénomènes de corrosion, notamment dûs aux fluides qu'elle véhicule et qui ont pour conséquence de produire de l'hydrogène atomique H⁺. Ce dernier a alors tendance à migrer sous forme atomique à travers la matrice de fer et de carbone de l'acier, pour venir se recombiner sur la paroi externe de la conduite intérieure, donc dans l'espace annulaire entre les deux conduites coaxiales pour former du gaz hydrogène. Le vide créé dans cet espace annulaire se dégrade alors en raison de l'augmentation de la pression d'hydrogène, lequel est un excellent conducteur de la chaleur, ce qui va à l'encontre de l'objectif visé. De la même manière, le matériau isolant continue à dégazer dans le temps, ce qui a pour effet de faire augmenter la pression de gaz et de réduire l'efficacité de l'isolation.

Un moyen connu pour palier cet inconvénient consiste en l'introduction dans l'espace annulaire d'un composé connu sous le nom de "getter", dont la fonction est d'absorber les dégagements gazeux et maintenir ainsi la pression au plus bas et ainsi conserver le niveau de vide souhaitable pendant toute la durée de vie du champ, laquelle peut dépasser 20 ans, voire 30 ans. Le "getter", disponible par exemple auprès de la Société SAES (Italie), est introduit lors de la fabrication du PIP sous vide et avant le scellement définitif.

Un autre moyen consiste à mettre en oeuvre des matériaux isolants poreux, notamment micro-poreux, tels que de la mousse de polyuréthane à cellules ouvertes ou nano-poreux, notamment du type aérogel. Les rayonnements franchissant ce genre de structure se trouvent piégés localement, car au lieu de traverser directement le médium, leur parcours est réfléchi de cellule en cellule et la vitesse moyenne de transfert se trouve divisée par 10, voire plus.

Ce type d'isolation est performant car elle permet de limiter les transferts de calories par conduction, convexion et rayonnement et de créer des écrans réflecteurs dont la fonction est de renvoyer les rayonnements énergétiques. La limitation de la conduction est obtenue par appauvrissement des molécules en présence ou par piégeage de celles-ci au sein d'une structure organisée avec des cavités au sein de la matière isolante poreuse, de préférence nano-poreuse. De tels matériaux isolants poreux et nano-poreux sont bien connus de l'homme de l'art et seront décrits plus en détails ci-après.

On connaît dans WO 01/38779 de la demanderesse décrivant un procédé selon le préambule de la revendication 1, des complexes tubulaires isolants dans lesquels le matériau isolant poreux est confiné dans une enveloppe souple scellée sous vide, ledit complexe se présentant sous forme tubulaire et étant inséré dans l'espace annulaire. Le matériau isolant se présente donc sous forme de matériau solide rigide qui tient en forme par lui-même.

L'enveloppe flexible est constituée d'un film multi-couches comprenant au moins une couche écran jouant le rôle de barrière moléculaire, de préférence un film métallique et au moins une couche isolante, de préférence thermoplastique. Cette typologie tubulaire est intéressante car elle ne présente pas de discontinuité dans le sens radial circulaire, la seule discontinuité d'isolation étant située à chacune des extrémités longitudinales du complexe.

Dans ce brevet WO 01/38779, on a décrit plus particulièrement la manière de préparer ces complexes cylindriques, et notamment la manière d'assembler et de souder aux extrémités des parois internes et externes de l'enveloppe souple en créant des plis destinés à résorber les différences de développé de la paroi interne et de la paroi externe de l'enveloppe lors de la mise en place autour de la conduite interne.

Toutefois, ce type de complexe tubulaire, bien que très performant, est complexe et coûteux à réaliser et à mettre en place dans l'espace annulaire des conduites coaxiales.

On connaît aussi le brevet EP-0,890,056 qui décrit une telle conduite à double enveloppe qui comporte, dans l'espace annulaire entre les deux dites conduites PIP, une plaque autoportante de matériau microporeux à pores ouverts, présentant une flexibilité suffisante pour être enroulée contre le tube interne. Cette plaque auto-portante n'occupe pas la totalité de l'espace annulaire et préserve ainsi un passage libre à une circulation longitudinale de gaz par lequel on fait régner une pression réduite tout au long dudit espace annulaire. La longueur unitaire des rames de conduites de ce type étant en général de l'ordre de 24 ou 48 m, cette disposition créant un passage libre pour la circulation des gaz lors du tirage au vide permet d'effectuer un pompage efficace et rapide pour atteindre le niveau de vide poussé recherché. Par contre, l'efficacité du système d'isolation n'est pas optimale, car l'espace annulaire entre la conduite interne et externe n'est que partiellement rempli de matériau micro ou nano-poreux sous vide poussé.

Ainsi le problème posé est de fournir des conduites coaxiales de type PIP, présentant une isolation thermique dans leur espace annulaire, qui soit à la fois efficace en termes d'isolation mais aussi plus simple à réaliser et à mettre en place dans l'espace annulaire desdites conduites.

Plus particulièrement, les exigences en matière d'isolation thermique requises selon la présente invention sont également :
. une isolation de très haute performance correspondant à des valeurs de coefficient de transfert thermique de l'ordre de quelques milliwatts,
. une isolation de faible encombrement pour pouvoir se loger dans des espaces confinés réduits (c'est le cas dans l'aérospatiale, l'aéronautique, le pétrole en mer ou à terre),
. une isolation thermique légère pour ne pas perturber et/ou alourdir la structure primaire à isoler (l'isolation ne doit pas induite des efforts et des contraintes hors normes),
. une isolation thermique facile d'emploi et adaptable à toutes les formes de tuyauterie,
. une isolation thermique couvrant une large gamme de températures depuis les très basses températures (-170°C ou moins) jusqu'à des températures élevées de l'ordre de 150 à 200°C, voire plus.

Pour ce faire, la présente invention fournit un procédé d'isolation thermique de l'espace annulaire d'un élément d'un ensemble de deux conduites coaxiales dont l'espacement est assuré de préférence par des éléments centraliseurs, avec un matériau isolant thermique poreux, confiné sous pression absolue réduite de gaz dans ledit espace annulaire selon lequel :
a/ on dispose ledit élément de conduites incliné, de préférence d'un angle α de 5 à 30°, le dit espace annulaire étant fermé à chaque extrémité par une pièce de fermeture, la pièce de fermeture à l'extrémité supérieure comprenant un orifice de remplissage obturable, et
b/ on remplit sensiblement intégralement l'espace annulaire dedit matériau isolant sous forme de particules en vrac, de préférence sous forme granulaire, en déversant ledit matériau isolant dans le dit orifice de remplissage de la pièce de fermeture à l'extrémité la plus haute dudit élément de conduites incliné, le dit espace annulaire étant maintenu sous vide poussé pendant le remplissage.

De préférence on agite au moins par intermittence lesdites particules de matériau isolant au fur et à mesure du remplissage de l'espace annulaire en faisant vibrer, de préférence verticalement, et/ou en faisant pivoter sur lui-même ledit élément de conduites en rotation angulaire alternée par rapport à son axe longitudinal XX', afin de compacter ledit matériau isolant.

On entend ici par « matériau isolant poreux », un matériau isolant présentant une porosité supérieure à 80%, de préférence supérieure à 90%.

La position oblique de la rame permet un cheminement naturel des particules de matériau isolant dans l'espace annulaire sous l'effet de la gravité, jusqu'à atteindre le front montant de matériau isolant. Sous le front montant, l'espace annulaire est normalement complètement rempli de matériau isolant, alors qu'au dessus dudit front montant, l'intégralité de l'espace annulaire est libre et facilite la progression de particules vers le bas sous l'effet de la gravité.

Dans le cas où le matériau isolant présente une compacité médiocre, c'est-à-dire dans le cas où les particules sont disjointes et présentent des vides même très faibles, il peut en résulter, au cours du transport de l'installation sur site, et même durant toute la durée de vie de la conduite, en cas de coups de bélier ou de flexions alternées de la conduite, des mouvements de particules les unes vis-à-vis des autres, qui engendrent un compactage du matériau isolant. Lors de ce compactage, les particules s'organisent les unes par rapport aux autres, les particules de faible diamètre venant remplir les vides entre grosses particules, et donc le volume global de matériau isolant se réduit, pouvant créer ainsi des vides qui, sous l'effet de la gravité sur chacune desdites particules, se propagent vers le haut, c'est-à-dire vers le sommet de la conduite, pouvant créer ainsi un point froid par manque localisé de matériau isolant. Dans le cas d'une conduite posée au sein d'une tour de pose en J, la conduite est quasiment en position verticale à la sortie du navire et la quasi intégralité desdits vides se retrouvent alors rassemblés près de l'extrémité supérieure de la rame, créant ainsi une zone, pouvant être importante dans le cas de rames de 24 ou 48m de longueur, dont les performances thermiques sont alors localement médiocres, voire inacceptables. C'est pourquoi, on agite avantageusement, pendant toute la durée du remplissage, la masse de matériau isolant de préférence dans la zone proche du front montant, pour que les particules se mettent en place les unes par rapport aux autres de manière optimale, évitant ainsi la formation de vides indésirables entre lesdites particules, surtout dans la zone des éléments centraliseurs disposés à la surface de la conduite interne et assurant l'espacement entre les deux conduites interne et externe, lesquels éléments centraliseurs constituent un obstacle sérieux à la progression et au compactage des particules. Pour ce faire, la mise en rotation alternée de la rame sur toute sa longueur, facilite grandement cette compacité optimale recherchée. De même la mise en vibration de la rame dans la zone du front montant améliore avantageusement ce processus de compactage. Rotation et vibration seront soit effectuées simultanément, soit de manière séquentielle.

Bien que le matériau isolant puisse être confiné dans l'espace annulaire et maintenu sensiblement à la pression atmosphérique, et présenter ainsi un niveau acceptable d'isolation, il est en général plus intéressant de le maintenir sous pression absolue réduite de gaz. Pour créer cette pression absolue réduite, on peut effectuer un tirage au vide après remplissage intégral de l'espace annulaire en particules de matériau isolant, mais ce tirage à partir d'un ou deux orifices d'extrémité demande un temps considérable, voire est quasiment impossible en raison de la longueur unitaire des rames qui atteint et dépasse 24 ou 48m. Ainsi, selon la présente invention, on effectue un tirage au vide pendant le remplissage, de préférence même avant le remplissage, dudit espace annulaire en dites particules de matériau isolant avant de démarrer le processus de transfert des particules de matériau isolant, on connecte avantageusement de manière étanche tous les éléments de transfert, depuis le réservoir de particules, puis les diverses chambres intermédiaires et les flexibles de liaison, jusqu'à l'espace annulaire, et l'on tire avantageusement au vide l'ensemble à un niveau de pression absolue bien inférieur au niveau de vide final recherché. Ce niveau de pression absolue est appelé dans la suite de la description « vide poussé ». Ensuite, on effectue alors le remplissage sous ledit « vide poussé ». En fin de remplissage, l'espace annulaire est plein de particules compactées de matériau isolant à la pression absolue correspondant sensiblement audit « vide poussé », c'est-à-dire à une pression absolue inférieure à la pression recherchée. Ainsi, à titre d'exemple, si l'on recherche un vide final de 1 mbar, soit 100 Pa, on effectuera un tirage au vide pour atteindre un « vide poussé », par exemple, de 0.2 à 0.5 mbar, soit 20 à 50 Pa.

Ledit matériau isolant particulaire peut se présenter sous forme de particules de diverses formes, y compris sous forme de poudre ou de morceaux de fibres, ou encore de préférence sous forme de granules, facilitant ainsi le roulement naturel sous l'effet de la gravité, à l'intérieur de l'élément de conduite incliné.

Selon une autre caractéristique préférée du procédé selon l'invention, à l'étape b), on déverse ledit matériau isolant depuis un premier réservoir dans lequel on a réalisé un vide poussé en tirant au vide à travers un orifice muni d'une première vanne d'isolation étanche dudit réservoir, et lesdites particules de matériau isolant sont véhiculées par l'intermédiaire d'une première conduite flexible entre ledit premier réservoir et le dit orifice de remplissage d'une pièce de fermeture de l'espace annulaire à l'extrémité supérieure de l'élément de conduites incliné, et avant le remplissage dudit espace annulaire et de préférence aussi pendant ledit remplissage, on tire au vide celui-ci à travers un orifice muni d'une deuxième vanne d'isolation étanche communiquant avec ladite première conduite flexible.

Selon d'autres caractéristiques avantageuses de la présente invention :
- ladite première conduite flexible est reliée à une chambre de remplissage, celle-ci étant solidaire de ladite pièce de fermeture, au niveau dudit orifice de remplissage, ladite chambre de remplissage présentant de préférence à sa base une forme d'entonnoir évasé vers le haut, et on tire au vide ladite chambre de remplissage, la chambre de remplissage renfermant en outre un dispositif de manutention d'un bouchon permettant l'obturation dudit orifice de remplissage après remplissage ;
- ledit premier réservoir communique à sa base avec une chambre de séparation de préférence équipée en partie haute d'un déflecteur en forme d'entonnoir renversé évasé vers le bas, destiné à séparer les particules dedit matériau isolant les unes des autres, lesdites particules se dirigeant par simple gravité vers un orifice inférieur en forme d'entonnoir évasé vers le haut, qui communique avec ladite conduite flexible, ladite chambre de séparation comprenant un orifice muni d'une deuxième vanne étanche, permettant de tirer au vide ladite chambre de séparation, ladite première conduite flexible, le cas échéant ladite chambre de remplissage, ainsi que ledit espace annulaire dudit élément de conduite, qui lui sont reliés.

Plus particulièrement encore, on réalise les étapes successives suivantes :
1/ on tire au vide à un niveau de vide de préférence inférieur à 10000 Pa, de préférence encore inférieur à 100 Pa :
   - ledit premier réservoir à travers ledit orifice muni d'une première vanne d'isolation étanche, et
   - le volume interne de ladite chambre de séparation , de ladite première conduite flexible , de ladite chambre de remplissage et dudit espace annulaire , et à travers ledit orifice dudit premier réservoir , puis
2/ on ouvre un orifice inférieur muni d'une vanne inférieure d'isolation intercalé entre ledit premier réservoir et ladite chambre de séparation, de manière à mettre en communication l'intérieur dudit premier réservoir et de ladite chambre de séparation, lorsque ceux-ci se trouvent sensiblement au même dit niveau de vide poussé, puis
3/ on obture ledit orifice de remplissage depuis l'intérieur de ladite chambre de remplissage, une fois que ledit espace annulaire est rempli de matériau isolant.

Avantageusement, lors du remplissage, on mélange des particules de getter aux particules dudit matériau isolant, par l'intermédiaire d'un deuxième réservoir équipé d'un orifice muni d'une quatrième vanne d'isolation étanche de tirage au vide, ledit deuxième réservoir coopérant par l'intermédiaire d'une cinquième vanne d'isolation étanche en partie basse, avec une deuxième conduite flexible, assurant la liaison avec ladite chambre de remplissage , ledit deuxième réservoir étant maintenu sous vide poussé, au même niveau de vide absolu que les autres éléments du dispositif, pendant toute la durée du remplissage, le remplissage se faisant par simple gravité, par ouverture de ladite cinquième vanne d'isolation étanche.

De préférence, ledit getter est mélangé de manière continue ou discontinue par simple ouverture de ladite cinquième vanne d'isolation étanche, de manière à être réparti tout au long de la longueur dudit espace annulaire dudit élément de conduites.

De préférence encore, ladite première conduite flexible comprend un ressort interne en spirale apte à être mis en rotation pour améliorer l'entraînement des particules et empêcher la formation de bouchons de matériaux isolants à l'intérieur de ladite conduite, c'est-à-dire lors du parcours desdits granules de matériau isolant.

Avantageusement, les particules de matériau isolant présentent des dimensions variables s'étendant sur une fourchette de 10 µm à 5 mm, de manière à ce que les particules de plus petites dimensions puissent se loger dans les espaces intersticiels entre les particules de plus grandes dimensions, ce qui permet d'améliorer la compacité du matériau isolant, c'est-à-dire le rapport du volume réel de matière isolante dans un contenant de volume donné.

Avantageusement encore, les particules de matériau isolant sont des grains sphériques ou sensiblement sphériques, de préférence de 0,5 à 5 mm de diamètre.

Cette configuration facilite leur roulement à l'intérieur de l'espace annulaire incliné.

Avantageusement, ledit matériau isolant est un matériau nano-poreux obtenu à partir des matériaux suivants connus de l'homme de l'art :
- les matériaux inorganiques en poudre, en granules ou en fibres tissées ou non tissées, notamment à base de substances minérales choisies parmi la silice, l'alumine, la perlite ou respectivement à base de fibres de verre ou fibres de céramique, et,
- les matériaux organiques à cellules ouvertes, de préférence de la mousse de polyuréthane, et
- des matériaux mixtes organiques/inorganiques tels que la mousse polyuréthane renforcée par des fibres ou des matériaux composites.

Dans un mode de réalisation préféré, le matériau isolant à l'intérieur de la dite enveloppe est un nano-matériau notamment un aérogel, de préférence un aérogel de silice ou d'oxyde de titane. Dans un autre mode de réalisation, le matériau isolant nano-poreux est une mousse de matériau synthétique nano-poreux présentée sous forme granulaire.

Un aérogel présente une porosité avec des pores de dimensions nanométriques ce qui lui confère un excellent niveau d'isolation sous pression atmosphérique normale et un niveau d'isolation extrême sous pression réduite de gaz, donc sous vide poussé. Les systèmes d'isolation basés sur un aérogel présentent une densité extrêmement faible, ce qui diminue d'autant la conductivité thermique directe. Ainsi, un aérogel présente une densité par rapport à l'eau inférieure à 0.1, la porosité étant de ce fait supérieure à 90%, et plus particulièrement une densité de 0.08 à 0.1.

On cherche à obtenir des niveaux d'isolation extrêmement poussés, c'est-à-dire des valeurs du coefficient de transfert thermique global, ramené au diamètre intérieur de la conduite intérieure, US 0.5 W /m²K et, pour améliorer les performances de ces matériaux de base, il est important de vider l'espace annulaire du gaz qu'elle contient, en général l'air, pour limiter au minimum les échanges thermiques par contact. Le niveau de vide requis dépend du matériau isolant considéré. Ainsi, dans le cas de fibre de verre, le vide doit être extrêmement poussé et donc la pression absolue doit être de l'ordre de 10Pa. Dans le cas de mousse de polyuréthanne, la pression absolue doit être inférieure à 500Pa, de préférence de 100 à 500Pa. Dans le cas de silice compactée la pression absolue doit être inférieure à 5000Pa, de préférence de 2500 à 5000Pa. Et, dans le cas des aérogels, la pression absolue doit être inférieure à 10000 Pa, ce qui représente un vide peu poussé. Ainsi, il apparaît que pour des matériaux peu sophistiqués, tel la fibre de verre, le niveau de vide requis est extrêmement poussé, alors que pour des aérogels, le niveau de vide est beaucoup moins contraignant. Le choix d'un type d'isolant est donc effectué sur des critères technico-économiques, et peut varier selon les diamètres des conduites et l'épaisseur de matériau requis, ce qui a une influence considérable sur le volume donc sur le coût de fourniture, le processus de tirage au vide restant sensiblement le même. Dans le cas de vide poussé, on intègre avantageusement du getter au sein du matériau isolant afin que ledit getter absorbe les molécules piégées à la surface desdits matériaux et maintiennent ainsi le niveau de vide recherché. De plus, la présence d'un getter présente l'avantage de continuer le tirage au vide par absorption ou adsorption des molécules de gaz résiduel, après scellement définitif de l'espace annulaire, ce phénomène se poursuivant sur plusieurs semaines, voire plusieurs mois en fonction de la porosité interne, et permet couramment d'améliorer de 10 à 30% le niveau de vide.

Si les aérogels présentent un niveau de performance intéressant à des pressions absolues de l'ordre de 10000Pa, c'est-à-dire à des pressions absolues de l'ordre du dixième de la pression atmosphérique, il est avantageux d'envisager des niveaux de pression largement inférieurs, de manière à se trouver sur une portion quasiment horizontale de la courbe conductivité thermique/pression absolue.

Dans le cadre des installations par grande profondeur, les conduites sous-marines ainsi que les ensembles de conduites coaxiales sous-marines sont assemblés à terre en éléments de longueur unitaire, de l'ordre de 10 à 100 m selon la capacité de tenue en charge du système de pose. Puis ils sont transportés ainsi en mer sur un navire de pose. Lors de la pose, les longueurs unitaires des divers éléments d'ensembles de conduites coaxiales sont raccordées les unes aux autres à bord du navire et au fur et à mesure de leur pose en mer. Il est donc important que ce raccordement puisse être intégré dans le procédé de montage et d'assemblage de la conduite et de pose de celle-ci au fond de la mer en le retardant le moins possible, et puisse donc être réalisé rapidement et aisément.

Pour ce faire, on utilise des pièces de jonction ou pièces de raccordement forgées en acier, assemblées aux extrémités desdits éléments d'ensembles de conduites coaxiales à assembler. La pièce de jonction à l'extrémité aval d'un premier élément d'ensemble de conduites coaxiales non encore assemblées, étant raccordé à la pièce de jonction à l'extrémité libre amont d'un deuxième élément d'ensemble de conduites coaxiales déjà assemblées en aval.

Dans un mode de réalisation avantageux, dans le procédé selon l'invention, ledit élément de conduites est destiné à l'assemblage de conduites sous-marines en acier et présente une longueur de 10 à 100 mètres, de préférence d'environ 50 mètres, et les dites pièces de fermetures sont constituées chacune par une pièce forgée de jonction de révolution , destinée à la jonction de deux dits éléments de conduites coaxiales bout à bout, et assurant la fermeture dudit espace annulaire à chaque extrémité dudit élément de conduite, ladite pièce de jonction située à l'extrémité supérieure dudit élément de conduites incliné, présentant un orifice obturable sur sa paroi extérieure, permettant le remplissage dudit espace annulaire, à l'aide dudit matériau isolant.

Plus particulièrement la dite pièce forgée de jonction comprend deux branches de révolution dont une branche externe et une branche interne formant une fourche délimitant ledit espace annulaire, fourche dont les extrémités cylindriques libres sont assemblées aux extrémités cylindriques respectivement des conduites externes et internes.

Dans une variante de réalisation avantageuse du procédé de l'invention, ledit élément de conduites est maintenu incliné par au moins une tour support sur laquelle il repose, et de préférence il est supporté par au moins trois tours supports, une tour support étant disposée respectivement à chaque extrémité et les autres étant réparties, de préférence de manière sensiblement régulière, entre les deuxdites tours supports d'extrémité.

Selon une caractéristique avantageuse, pour agiter les particules au cours du remplissage, on réalise des rotations angulaires alternées d'amplitude 2β, de préférence de 10 à 90°, correspondant à des rotations d'un angle β de 5 à 45 degrés par rapport au plan axial vertical de l'élément de conduites.

Plus particulièrement, on réalise lesdites rotations angulaires alternées à l'aide de roulettes motorisées disposées transversalement à la direction longitudinale XX' dudit élément de conduites, en appui contre la paroi extérieure dudit élément de conduites, de part et d'autre de celle-ci, et sur lesquelles repose ledit élément de conduites, lesdites roulettes étant disposées au sommet de la (ou desdites) tour(s) support(s).

Lesdites roulettes ont donc un axe de rotation parallèle à l'axe longitudinal XX' dudit élément de conduites coaxial. Un dispositif de butée axiale situé à l'axe de la conduite, de préférence en partie basse, maintient la rame et l'empêche de glisser vers le bas.

Selon un mode de réalisation préféré, pour réaliser l'agitation des particules en cours de remplissage, on réalise lesdites vibrations par des mouvements verticaux de montée et descente sur une amplitude de 1 à 50 cm de hauteur, impartis audit élément de conduites à l'aide d'un actionneur mécanique, tel une bielle reliée à un vilebrequin actionné par un moteur, ou d'un vérin, disposé au sommet de la (ou des) dite(s) tour(s) support(s).

Dans un mode de réalisation particulier comportant trois tours-supports, on réalise les étapes dans lesquelles :
- en début de remplissage, on fait vibrer ledit élément de conduites au niveau de son point d'appui sur la tour support la plus basse et on le maintient fermement fixe au niveau des points d'appui au sommet des autres tours supports et
- lorsque ledit remplissage a atteint environ le tiers de la longueur dudit élément de conduites, on fait vibrer ledit élément de conduite au niveau du sommet d'une tour support située sensiblement au milieu de sa longueur et on maintient fermement fixement ledit élément de conduite au niveau des tours supports à chaque extrémité, puis
- lorsque le remplissage a atteint environ les deux tiers de la longueur de l'élément de conduites, on fait vibrer ledit élément de conduites au niveau de son appui sur la tour support vers l'extrémité supérieure de l'élément de conduites incliné et on maintient fermement ledit élément de conduites au niveau des deux autres tours supports.

Avantageusement encore, pour réaliser avec un même dispositif desdites vibrations et rotations, ledit vérin actionne une plateforme supportant lesdites roulettes sur lesquelles ledit élément de conduites vient en appui, et on réalise, soit simultanément, soit de manière séquentielle, des vibrations et des rotations angulaires alternées.

Le supportage de l'élément de conduite incliné peut être réalisé sous la forme d'une rampe continue ou discontinue, intégrant en des points particuliers les actionneurs mécaniques ou les vérins nécessaires à la mise en vibration de la rame, localement, à sa fréquence propre de résonance.

La présente invention fournit également une installation utile pour la mise en oeuvre d'un procédé selon l'invention comprenant :
- des moyens d'inclinaison d'un dit élément de conduite, comprenant de préférence des tours supports telles que définies ci-dessus, et
- des moyens de tassement par vibration et/ou rotation en cours de remplissage, de préférence des moyens de vibration à l'aide de vérins tels que définis ci-dessus et des moyens de rotation à l'aide de roulettes telles que définies ci-dessus et
- des moyens de remplissage comprenant de préférence :
   . un dit premier réservoir et une dite première conduite flexible telle que définie ci-dessus, et
   . des pompes à vide coopérant avec des orifices munis de vannes d'isolation étanches, et
   . de préférence, une dite chambre de remplissage, et une dite chambre de séparation telles que définies ci-dessus, et
   . de préférence, un dit deuxième réservoir de getter et une dite deuxième conduite flexible tels que définis ci-dessus.

La présente invention fournit également un élément de conduites coaxiales, isolé thermiquement à l'aide d'un matériau isolant poreux particulaire, rempli en vrac sous vide poussé à l'intérieur de son espace annulaire,de préférence à une pression inférieure à 10000Pa , de préférence encore inférieure à 100Pa, pouvant être obtenu par un procédé selon l'invention.

Dans le cas de particules parfaitement sphériques et de diamètre constant, le coefficient de remplissage théorique varie selon le mode d'empilement des sphères, d'une valeur minimale 0.5236 (π/6) à une valeur maximale de 0.7405 (π/3√2). Le simple fait d'agiter l'ensemble des particules lors du remplissage, permet de se rapprocher dudit coefficient maximal de remplissage. On améliore avantageusement ledit coefficient de remplissage en considérant un matériau isolant constitué de granules de diamètres étagés, notamment de 10 µm à 5 mm, de manière à ce que les petits granules viennent se loger dans l'espace compris entre plusieurs granules de fort diamètre, ce qui permet alors d'atteindre des coefficients de remplissage de l'espace annulaire supérieurs à 0,85, notamment de 0.85 à 0.95.

De préférence, ledit élément de conduites coaxiales comprend à chacune de ses extrémités une pièce de jonction de révolution, destinée à assurer la jonction entre deux éléments de conduites ainsi équipés bout à bout.

Enfin, la présente invention a pour objet une conduite comprenant des éléments de conduites selon l'invention, assemblés bout à bout.

Plus particulièrement, il s'agit d'une conduite sous-marine en acier.

Plus particulièrement encore, il s'agit d'une conduite de liaison fond-surface, apte à assurer une liaison à grande profondeur, de préférence supérieure à 1 000 mètres.

D'autres caractéristiques et avantages de la présente invention apparaîtront à la lumière de la description détaillée qui va suivre, en référence aux figures suivantes dans lesquelles :
la figure 1 représente en coupe longitudinale en vue de côté une rame de type PiP remplie d'un matériau isolant sous pression réduite de gaz et équipée à ses extrémités de pièces forgées de jonction,
la figure la est une section transversale de la rame de la figure 1 selon le plan AA au niveau d'un élément centraliseur,
les figures 1b et 1c sont des coupes en vue de côté détaillant respectivement les extrémités gauche et droite de la rame selon la figure 1,
la figure 2 illustre le mode de remplissage de la rame en position inclinée selon un angle α par rapport à l'horizontale, d'un matériau isolant granuleux par gravité, à partir d'un récipient situé au dessus de ladite rame,
la figure 3 est une coupe en vue de côté illustrant le remplissage de granule dans la partie supérieure de la rame,
la figure 3a est une coupe selon le plan BB de la figure 3 détaillant la mise en rotation alternée de la rame, ainsi que le dispositif d'excitation en vibration de ladite rame,
la figure 3b est une coupe en vue de côté d'une chambre de séparation et de dégazage des granules avant remplissage de la rame,
les figures 4a, 4b et 4c illustrent en vue de côté le procédé de compactage des granules au sein de la rame, par excitation à la fréquence propre de vibration de la rame, respectivement dans la partie basse de la rame (fig.4a), dans la partie centrale (fig.4b) et dans la partie supérieure de la rame (fig.4c),
la figure 5 est un graphique relatif aux aérogels qui représente la valeur de la conductivité thermique λ (mW/mK) en fonction de la pression absolue de gaz (100 Pa = 1 mbar).

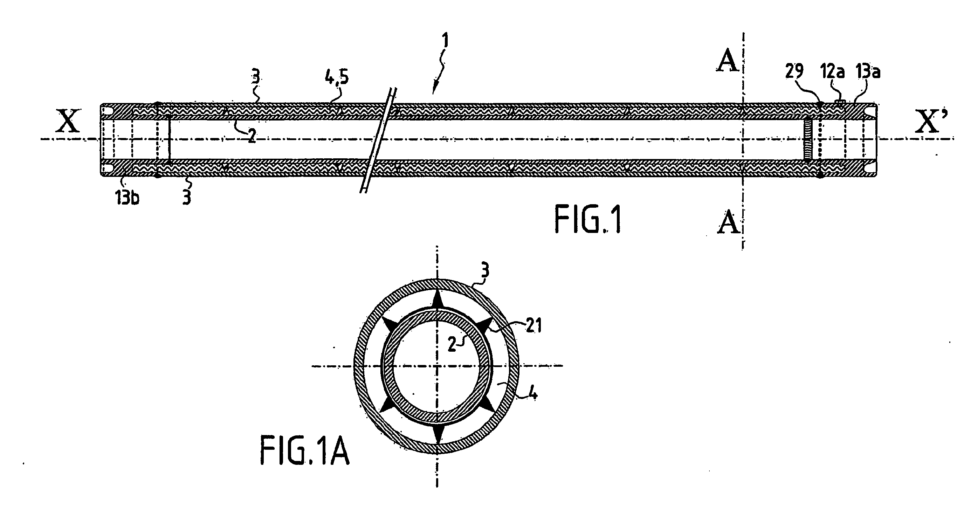

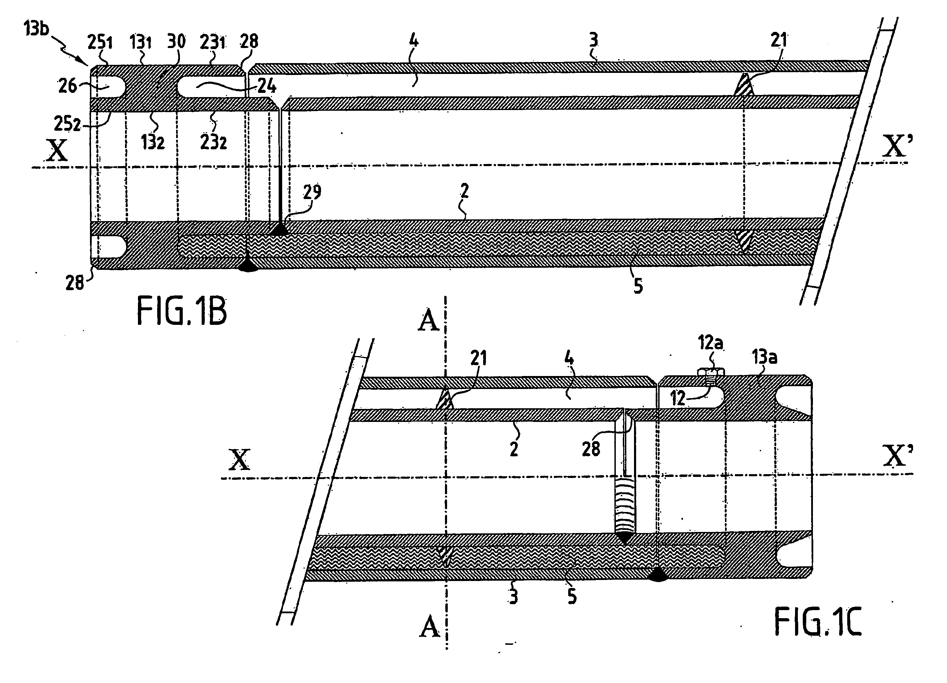

Dans les figures 1, 1b et 1c on a représenté une conduite 1 de type PiP constituée d'une conduite externe 3 et d'une conduite interne 2 solidarisées par soudure à une première pièce de jonction forgée 13b située sur la gauche de la figure 1b et à une seconde pièce de jonction forgée 13a située sur la droite de la figure 1c, l'espace annulaire entre les deux dites conduites interne et externe étant rempli d'un matériau isolant micro ou nano-poreux 4, des éléments centraliseurs 21 répartis, de manière espacée de préférence régulière, autour de la circonférence et le long de la longueur de la conduite interne. Ces centraliseurs maintiennent la distance radiale entre les conduites interne et externe et donc l'épaisseur dudit espace annulaire à une valeur sensiblement constante.

Lesdites pièces de jonction 13a 13b sont délimitées comme suit :
□ dans une direction radiale par rapport à un axe longitudinal XX' de révolution de ladite pièce, lesdites pièces sont délimitées par une paroi interne cylindrique 13₂ sensiblement de même diamètre que celui de la partie courante de ladite conduite interne 2, et par une paroi externe 13₁ cylindrique de diamètre sensiblement égal au diamètre externe de la partie courante de ladite conduite externe 3, et
□ dans la direction axiale longitudinale XX',
   • du côté de ladite pièce de jonction destinée à être assemblée par soudage 29 à l'extrémité desdites conduites externe et interne d'un dit élément d'un ensemble d'au moins deux conduites coaxiales, lesdites parois externe 13₁ et interne 13₂ de ladite pièce de jonction forment en section longitudinale des premières branches respectivement externe 23₁ et interne 23₂ sensiblement de même épaisseur que lesdites conduites externe 3 et interne 2 auxquelles elles sont destinées à être assemblées, lesdites premières branches externe 23₁ et interne 23₂ délimitant une première cavité annulaire 24, et
   • du côté opposé de ladite pièce de jonction destinée à être assemblée à une autre dite pièce de jonction, elle-même assemblée par soudage 29 à l'extrémité d'un autre élément d'ensemble de deux conduites coaxiales, lesdites parois externe 13₁ et interne 13₂ forment en section longitudinale des deuxièmes branches respectivement externe 25₁ et interne 25₂, délimitant une deuxième cavité annulaire 26,
   • les fonds desdites première et deuxième cavités 24, 26 étant espacés dans ladite direction longitudinale XX', de manière à délimiter une zone pleine 30 de ladite pièce de jonction dans laquelle lesdites parois externe 13₁ et interne 13₂ forment les faces externe et interne d'une même paroi cylindrique.

Comme montré sur la figure 1b, la première cavité annulaire 24 est ouverte sur l'espace annulaire 4 et peut recevoir le matériel d'isolation 5 de façon à continuer l'isolation de la conduite le plus loin possible.

Après assemblage et raccordement de deux longueurs unitaires de PiP équipées de pièces de jonction forgées selon l'invention, la deuxième cavité annulaire 26 d'une première pièce de jonction à l'extrémité aval d'une première longueur de PiP est ouverte sur une deuxième cavité annulaire d'une deuxième pièce de jonction la à l'extrémité amont d'une deuxième longueur de PiP formant ainsi une chambre formée par soudage au niveau des extrémités des deuxièmes branches externes 25₁. Mais cette chambre n'est pas étanche, car l'extrémité des deuxièmes branches internes 25₁ des deux pièces de jonction 13 n'est pas soudée, les faces desdites branches étant simplement en contact l'une avec l'autre.

Selon l'invention, les extrémités libres desdites premières branches externes 23₁ et interne 23₂ présentent une forme, en chanfrein 28, ce qui permet d'effectuer de manière connue une première passe de soudage dite « de pleine pénétration », suivie d'un remplissage complet du chanfrein comme explicité en 29. Sur la figure 1b, les chanfreins 28 sont tournés vers l'extérieur et sont donc aptes à être soudés depuis l'extérieur desdites conduites externe 23₁, et interne 23₂. Sur la figure 1b, les chanfreins 28 sont tournés vers l'extérieur à l'extrémité de ladite première branche externe et vers l'intérieur à l'extrémité de ladite première branche interne, les rendant aptes à être soudés respectivement depuis l'extérieur dudit ensemble pour lesdites premières branches externes et depuis l'intérieur de ladite conduite interne pour lesdites premières branches internes.

La formation desdites première et deuxième cavités annulaires permet d'une part d'établir une continuité au niveau du diamètre interne de la conduite interne et d'autre part de fournir une relative continuité et identité d'inertie de la section transversale, de la zone courante du PiP et de la zone de raccordement, l'épaisseur de la branche externe de la pièce de jonction forgée étant sensiblement égale ou légèrement supérieure à l'épaisseur courante de la conduite externe.

L'éloignement des extrémités desdites premières branches externe et interne par rapport au fond de la première cavité et de l'extrémité de ladite deuxième branche externe par rapport au fond de ladite deuxième cavité, permet de réaliser les soudages dans les meilleures conditions, car la masse d'acier de part et d'autre de la zone de soudage est sensiblement égale et la zone de fusion ne se trouve alors pas perturbée par un « effet radiateur » provoqué par la zone pleine et massive située entre les fonds desdites première et deuxième cavités, ladite perturbation consistant en un refroidissement déséquilibré entre la gauche et la droite de ladite zone de soudure.

Enfin, la continuité du diamètre de la paroi externe au niveau de la dite pièce de jonction par rapport à celui des parties courantes des conduites externes permet de créer une augmentation importante de l'inertie de la section transversale au niveau de la zone de raccordement de deux pièces de jonction adjacentes, et donc de renforcer le raccordement là où précisément les contraintes sont maximales. En effet, l'inertie de la section transversale d'une conduite par rapport à son centre varie comme la puissance 4 du rayon, ce qui conduit à une épaisseur nécessaire considérable dans le cas de l'art antérieur tel que décrit dans GB-2,161,565 et GB-2,191,942. En revanche, si la section transversale considérée correspond à celle de la conduite externe du PiP, l'épaisseur nécessaire est fortement réduite, voire même dans certains cas divisée par deux, ce qui simplifie considérablement les opérations d'assemblage par soudage effectuées à bord des navires d'installation, dans des conditions difficiles.

D'autre part le fait que deux pièces de jonction adjacentes soient soudées, uniquement au niveau de l'extrémité desdites deuxièmes branches externes, permet que la totalité des phénomènes de transferts de charge et de contraintes soit localisée au niveau externe et n'implique pas lesdites parois internes, ce qui permet de mieux contrôler les risques de fissuration ou phénomènes de fatigue et d'éviter que le dispositif ne se ruine complètement au niveau de la paroi interne.

En outre, le fait que les deux extrémités desdites deuxièmes branches internes de deux pièces adjacentes selon l'invention, ne soient pas soudées entre elles, autorise des mouvements infimes desdites parois internes face à face dus à des éventuelles flexions ou variations de pression ou de température et autorise que lesdites parois internes puissent se déformer plastiquement et permettre un matage desdites deuxièmes branches internes sans risquer de transférer des charges de compression de contact, ce qui permet d'éviter de perturber la répartition des contraintes dans la zone d'assemblage et que l'essentiel des contraintes soit repris au niveau des parois externes desdites pièces.

La formation de ladite paroi interne cylindrique qui assure une continuité presque complète avec la conduite interne, permet d'éviter des phénomènes de turbulence du type vortex dans la circulation du fluide à l'intérieur du dispositif après assemblage, au niveau du raccordement de deux dites pièces de jonction de deux portions de PIP adjacentes.

Toutes ces caractéristiques contribuent à améliorer radicalement le comportement en flexion, ainsi qu'en fatigue, d'un dispositif impliquant deux éléments d'ensemble coaxial équipés de dites pièces de jonction raccordées l'une à l'autre, à bord des navires d'installation.

Par ailleurs, la fabrication et l'assemblage desdites pièces de jonction sont relativement aisés et fiables en ce qui concerne le raccordement de deux pièces de jonction adjacentes et le raccordement d'une pièce de jonction avec l'extrémité d'un ensemble d'au moins deux conduites coaxiales.

On notera que ladite deuxième cavité ne doit pas être étanche après raccordement de deux pièces de jonction, vis-à-vis de l'intérieur de ladite paroi interne et de ladite conduite interne car lors du démarrage de la circulation d'un fluide à l'intérieur, celui-ci devra migrer vers cette deuxième cavité, l'étanchéité étant assurée par la soudure externe au niveau de l'extrémité desdites deuxièmes branches externes, le fluide se trouvant piégé durant toute le durée de vie de l'installation au niveau de cette deuxième cavité.

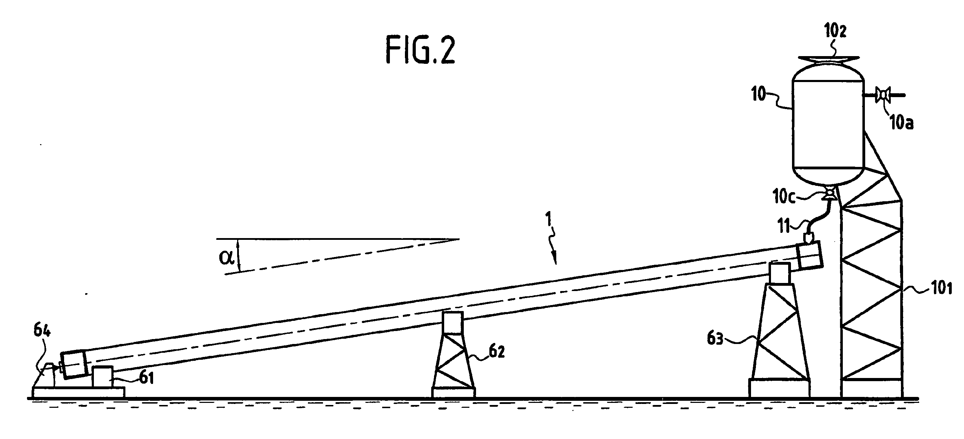

Pour la clarté de la description sur les figures 1a, 1b et 2, les divers éléments constitutifs ont été représentés soudés en partie basse des dessins, et en partie haute, positionnés face-à-face avant réalisation desdites soudures 29, et l'espace annulaire rempli de matériau isolant 5, en partie basse desdits dessins, et, en partie haute, positionnés face-à-face avant réalisation desdites soudures, l'espace annulaire étant vide de tout matériau isolant.

Un bouchon de fermeture étanche 12a obture l'orifice de remplissage 12 prévu dans la branche externe 23₁ de la pièce de jonction 13a.

Dans la figure 2 on a représenté le dispositif de remplissage d'une rame de PiP constitué de trois tours-supports 6₁, 6₂, 6₃ de hauteurs croissantes situées à proximité de ses extrémités et sensiblement au milieu de sa longueur, et maintenant ladite rame à une inclinaison sensiblement constante d'angle α. Un dispositif de butée axiale 6₄ situé à l'axe de la conduite, de préférence en partie basse, maintient la rame et l'empêche de glisser vers le bas. En partie supérieure, une première conduite flexible 11 relie l'orifice de remplissage 12 de la pièce de jonction forgée 13a, à un premier réservoir de stockage 10 des particules de matériau isolant poreux. Ledit premier réservoir de stockage est installé au dessus de l'extrémité supérieure de l'élément de conduite incliné 1 sur une tour-support 10, de manière à ce que le transfert de particules de matériau isolant puisse se faire par simple gravité.

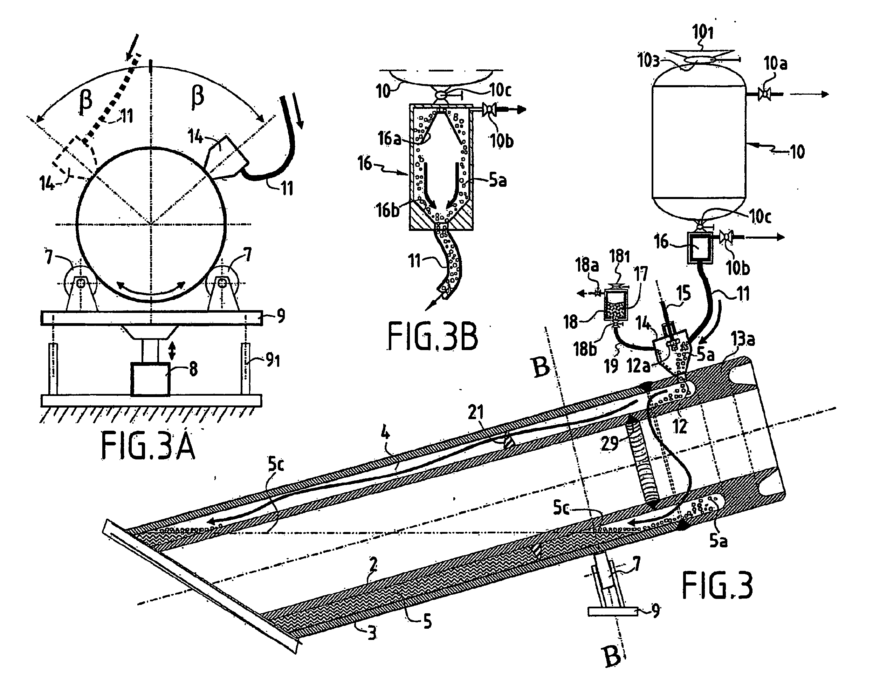

Sur la figure 3 on a détaillé les dispositifs permettant le transfert de particules de matériau isolant depuis ledit premier réservoir 10 vers l'espace annulaire 4 du PiP, à travers l'orifice de remplissage 12. Les granules 5a pénètrent dans l'espace annulaire 4 et par simple gravité se retrouvent en partie basse au niveau du front montant 5c de matériau isolant.

Le premier réservoir 10 est surmonté d'une trémie de chargement 10₂ et il est équipé d'une première vanne d'isolation étanche 10₃. Ledit premier réservoir 10 est également équipé d'une première vanne d'isolation étanche 10a permettant de tirer au vide ledit réservoir, ainsi que d'un orifice inférieur muni d'une vanne inférieure étanche 10c située dessous le dit réservoir 10. La vanne inférieure 10c débouche dans une chambre 16 de séparation des granules de matériau isolant poreux, détaillée sur la figure 3b. La chambre de séparation 16 est équipée en partie haute d'un déflecteur en forme d'entonnoir renversé 16a, c'est à dire évasé en s'élargissant vers le bas, de sorte que les granules tombent sur la face externe du déflecteur et sont éparpillées et séparées les unes des autres, lesdits granules se dirigeant par simple gravité vers l'orifice inférieur en forme d'entonnoir 16b évasé en s'élargissant vers le haut, puis vers le flexible de liaison 11. Un orifice muni d'une deuxième vanne d'isolation étanche 10b, situé de préférence en partie haute de la chambre de séparation 16 permet de tirer au vide ladite chambre pendant tout le processus de remplissage et ainsi d'améliorer le dégazage des particules de matériau isolant poreux 5a lors de leur passage dans ladite chambre de séparation 16 grâce à la séparation des particules.

Le premier conduit flexible 11 est relié à une chambre de remplissage 14 solidarisée de manière étanche à la pièce de jonction forgée 13 au niveau de l'orifice 12, de telle manière que les granules 5a amenées par le premier conduit flexible 11 pénètrent par l'orifice 12 dans l'espace annulaire 4 de ladite rame de PiP 1. A cet effet, la partie basse de ladite chambre remplissage 14 est avantageusement profilée en forme d'entonnoir de manière à faciliter le passage des granules 5a sous le simple effet de la gravité. En partie supérieure de ladite chambre de remplissage 14, on installe avantageusement un dispositif de manutention du bouchon 12a, constitué d'une tige 15 solidaire dudit bouchon. L'axe de ladite tige 15 et dudit bouchon 12a coïncide avec l'axe de l'orifice 12, de telle manière qu'en fin de remplissage de l'espace annulaire, on puisse obturer ledit orifice 12 par simple vissage du bouchon 12a, ledit vissage étant effectué depuis l'extérieur grâce à la tige 15, sans avoir à déconnecter la chambre de remplissage 14. Le passage de la tige 15 dans la chambre 14 étant étanche, il est ainsi possible d'effectuer l'intégralité du remplissage en granules 5a de l'espace annulaire 4, ainsi que l'obturation de l'orifice de remplissage 12 par le bouchon 12a, sous un vide poussé à l'extrême, notamment 100 Pa sans aucune introduction de gaz indésiré.

La rame présentant une longueur de l'ordre de 12, 24 ou 48m, le tirage au vide à travers une telle masse de matériau, pour atteindre un vide très poussé est quasiment irréalisable une fois que ledit matériau isolant est en place, c'est pourquoi, selon l'invention, on procède comme suit :
- on installe la rame sur des supports 6₁, 6₃ de manière à présenter une inclinaison α par rapport à l'horizontale, puis,
- on installe en contre-haut le premier réservoir 10 rempli de granules 5a de matériau isolant 5, ledit premier réservoir ayant été préalablement tiré au vide par l'orifice muni de la première vanne d'isolation étanche 10a, puis,
- on relie ledit premier réservoir 10 à la chambre de séparation 16 des granules que l'on relie par le conduit flexible 11 à la chambre de remplissage 14 solidarisée de manière étanche à la pièce de jonction forgée 13 au niveau de l'orifice de remplissage 12, puis,
- on tire au vide à travers l'orifice muni de la deuxième vanne 10b de la chambre de séparation 16 le volume constitué par ladite chambre 16, ledit flexible de liaison 11, ladite chambre de remplissage 14 et ledit espace annulaire 4 de ladite rame de PiP 1, puis,
- lorsque le niveau de vide souhaité est atteint, on ouvre la dite troisième vanne 10c de manière à mettre en communication l'intérieur du réservoir 10 et la chambre 16, ces deux volumes se trouvant alors sensiblement au même niveau de vide poussé. Le transfert des granules s'effectue alors par simple gravité jusqu'à ce que l'intégralité du volume de l'espace annulaire soit rempli de matériau isolant 5, puis,
- on ferme la troisième dite vanne inférieure 10c du dit premier réservoir 10, et
- on actionne la tige 15 en translation parallèlement à son axe et simultanément on le fait tourner de manière à présenter le bouchon fileté 12a en face du filetage correspondant de l'orifice de remplissage 12, puis on serre le bouchon de manière étanche, puis,
- on casse le vide dans les chambres de séparation 16 et chambre de remplissage 14 par ouverture de la dite deuxième vanne 10b de la chambre de séparation 16. La chambre de séparation 16 peut alors être libérée de la rame 1. Cette dernière est alors terminée et peut être transférée sur le parc de stockage de produits finis.

Pour améliorer le remplissage et faciliter la descente par gravité des granules 5a au sein de l'espace annulaire 4, on agite avantageusement la rame 1 comme explicité sur la figure 3a. A cet effet, ladite rame est supportée au niveau supérieur des structures 6₁, 6₃ par des rouleaux 7, de manière à pouvoir être mise en rotation alternative d'un angle ± β en 2 à 10 secondes par exemple, par une motorisation non représentée. Ceci permet d'agiter en permanence le front montant 5c des granules pour un bon compactage du matériau, et aussi d'éviter la formation d'obstructions au niveau des éléments centraliseurs 21, les dites obstructions risquant de créer des poches vides de matériau isolant, donc des points froids qui dégraderaient alors les performances du système d'isolation. Le conduit flexible 11 sera allongé en conséquence de manière à permettre le mouvement angulaire tout en assurant un transfert par gravité des granules 5a.

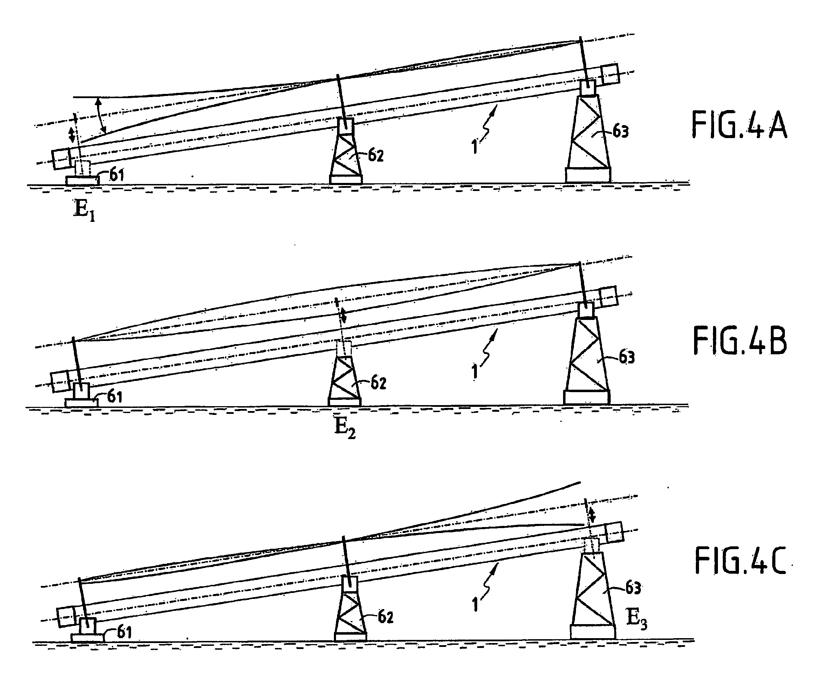

Dans une version préférée de l'invention illustrée sur les figures 3a et 4a, 4b, 4c, on soumet en outre régulièrement la conduite à des vibrations, par l'intermédiaire d'un vibreur, par exemple un vérin hydraulique asservi 8, solidaire d'une part du support 6₁, 6₃, et d'autre part d'une table 9, guidée en 9₁ par rapport audit support 6₁, 6₃, ladite table supportant également lesdits rouleaux 7. Par ce dispositif, on peut ainsi, en plus de la mise en rotation alternée de la rame d'un angle β, faire vibrer ladite rame de bas en haut et ainsi améliorer le compactage du matériau isolant, et aussi éviter des zones vides de matériau isolant, préjudiciables aux performances du système d'isolation.

La masse des rames 1 de 24 ou 48m étant très importante et représentant 10 à 15 tonnes, l'énergie nécessaire à la mettre en vibration sera avantageusement réduite à un niveau très faible, si la fréquence de l'excitation se trouve proche de la fréquence de résonance de ladite rame. A cet effet, on procèdera en séquence comme illustré sur les figures 4a, 4b et 4c.

En début de remplissage, comme explicité sur la figure 4a, l'excitation est effectuée au niveau du support 6₁, la rame étant fermement maintenue en 6₂ et 6₃ pour que la corde vibrante que compose la rame présente un noeud en ces points de contact avec 6₂ et 6₃. L'excitation est réalisée à la fréquence de résonance T1 propre à cette configuration. Il en résulte alors un mouvement important pouvant atteindre plusieurs centimètres, voire plusieurs décimètres, avec une énergie E1 très faible.

Lorsque le front montant 5c de granules atteint le tiers inférieur de la longueur de la rame, on adopte la configuration de la figure 4b, dans la quelle on excite E1 la rame en 6₂ E2 à la fréquence propre T2 alors que l'on maintient fermement ladite rame en ses points de contact avec 6₁ et 6₃ de manière à former des noeuds en ces points de la corde vibrante.

Lorsque le front montant 5c de granules atteint le tiers supérieur de la longueur de la rame, on adopte la configuration de la figure 4c, dans la quelle on excite E3 la rame en son point de contact au sommet de 6₃ à la fréquence propre T3 alors que l'on maintient fermement ladite rame en ses points de contact avec 6₁ et 6₂ de manière à former des noeuds en ces points de la corde vibrante.

Dans une version préférée de l'invention illustrée sur la figure 3, on incorpore aux granules, lors du remplissage, de manière continue ou non, des particules de getter 17, soit sous la forme de poudre ou de préférence sous la forme de granules. A cet effet, l'installation comprend un deuxième réservoir 18 muni d'une trémie de remplissage 18₁, d'un orifice de tirage au vide 18a, d'une vanne d'isolation étanche 18b et d'un deuxième conduit flexible 19 de liaison à la chambre de remplissage 14. Le deuxième réservoir 18 est maintenu sous vide poussé pendant toute la durée du remplissage de granules de matériau isolant et le getter est alors transféré par simple gravité, de manière continue ou discontinue, par la simple ouverture de la vanne 18b. Ledit getter est alors réparti tout le long de la rame et peut maintenir, pendant toute la durée de vie de la conduite installée au fond de la mer, le niveau de vide à une valeur optimale, par absorption ou adsorption des gaz résultant d'un dégazage dans le temps des particules de matériau isolant, ou des parois en acier dudit espace annulaire et des pièce de jonction forgée d'extrémité.

Avantageusement, lesdits vérins, ou actionneurs mécaniques, sont asservis avec un ordinateur, de manière à faire vibrer ledit élément de conduites à la fréquence propre de résonance dudit élément de conduites. L'utilisation d'un pilotage par un ordinateur permet de contrôler de manière très précise, non seulement la course dudit vérin, mais aussi sa trajectoire exacte dans le temps, et d'analyser en temps réel la réponse de la corde vibrante. Ainsi dès que la fréquence de résonance de la conduite est repérée par les capteur de déplacement lié à l'ordinateur, ce dernier se cale automatiquement sur ladite fréquence et peut alors limiter l'amplitude de la vibration en contrôlant de manière connue le transfert d'énergie vers la corde vibrante que constitue la conduite.

A titre d'exemple, une rame de PiP de 24m de longueur constituée d'une conduite interne 2 de 323.9mm de diamètre et de 21.4mm d'épaisseur, et d'une conduite externe 3 de 406.4mm de diamètre et de 17.5mm d'épaisseur, comporte un espace annulaire 4 représentant un volume global d'environ 630 litres et sensiblement 24 mm d'épaisseur radiale. La fréquence propre de résonance T1 de la rame correspondant à l'excitation E1 représentée sur la figure 4a est sensiblement de 2.49Hz. La fréquence propre de résonance T2 de la rame, correspondant à l'excitation E2 représentée sur la figure 4b est sensiblement de 0.44Hz. La fréquence propre de résonance T3 de la rame correspondant à l'excitation E3 représentée sur la figure 4c est sensiblement identique à T1, soit sensiblement 2.49Hz. L'énergie nécessaire au niveau de chacun des actionneurs mécaniques ou vérins 8 est limitée à quelques centaines de W, voire quelques kW.

A ces fréquences, on contrôlera la puissance transférée au système par les actionneurs mécaniques ou les vérins, de manière à limiter l'amplitude des oscillations vibratoires à quelques dizaines de cm, ce qui permet de limiter les contraintes locales dans la conduite externe à des niveaux acceptables en termes de résistance et de fatigue cumulée.

Les transferts de granules 4a de matériau isolant dans les conduites flexibles seront avantageusement facilités en intégrant à l'intérieur desdits conduites flexibles un ressort en spirale mis en rotation par un moteur, de préférence électrique, qui améliorera avantageusement l'entraînement des granules et empêchera la formation de bouchons de matériau et régularisera ainsi le transfert de matière, surtout dans le cas où la rame est mise en rotation alternée, comme explicité sur la figure 3a.

Avantageusement on utilise comme matériau isolant des granules de 0.5 à 2mm de diamètre constituée d'aérogel de silice de la société CABOT - USA. La masse volumique du matériau compacté est d'environ 100kg/m³.

Sur les figures 2 et 4a-4c, pour faciliter la compréhension du procédé de mise en vibration à la fréquence de résonance, on a illustré une rame supportée par trois tours-supports 6₁-6₃. En fait, selon la longueur de la rame, les diamètres et épaisseurs des conduites internes et externes, on définira avantageusement le nombre requis de tours-supports, ainsi que leur espacement, de manière à ce que la fréquence propre de résonance de chacun des tronçons corresponde à une plage de valeur acceptable, créant ainsi un mouvement d'agitation du front montant de matériau isolant, favorisant le compactage dudit matériau isolant au sein de l'espace annulaire du PiP. Ainsi, pour des rames de 48m on envisagera avantageusement 4, 5, 6 ou 7 tours-supports, voire plus, espacées de manière régulière ou non, selon les caractéristiques des conduites internes et externes.

On améliore avantageusement le compactage, en associant à la mise en vibration à la fréquence de résonance propre de la conduite, une vibration secondaire à fréquence plus élevée, par exemple quelques centaines, voire quelques milliers de hertz. Cette vibration est avantageusement produite par couplage local dans la zone du front montant, entre un actionneur, par exemple un moteur relié à une masse excentrique tournante, non représenté, externe ou interne à la conduite, et la paroi respectivement externe ou interne du PiP. L'énergie transférée met alors en vibration, non seulement la paroi de la conduite, mais aussi les particules de matériau isolant dans ladite zone du front montant, ce qui améliore leur mise en place, et donc la compacité globale du matériau isolant.

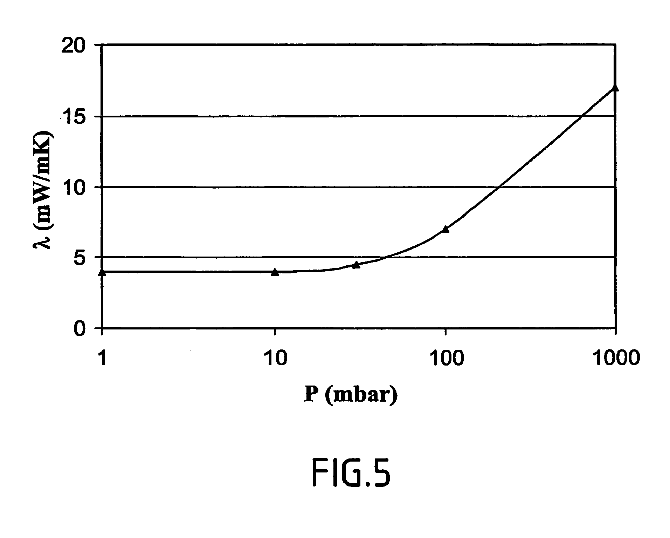

Si les aérogels présentent un niveau de performance intéressant à des pressions absolues de l'ordre de 10000Pa, c'est-à-dire à des pressions absolues de l'ordre du dixième de la pression atmosphérique, il est avantageux d'envisager des niveaux de pression largement inférieurs, de manière à se trouver sur une portion quasiment horizontale de la courbe conductivité thermique/pression absolue, telle que représentée sur la figure 5. En effet, en référence à ce graphique de la figure 5, à un niveau de pression de 500Pa, soit 5 millibars, en cas d'augmentation de la pression interne, par exemple de 100%, par exemple par dégazage dans le temps des parois des conduites, la conductivité thermique λ restera constante à la valeur de λ=4mW/mK. Par contre, aux alentours de 10000Pa, la conductivité thermique est d'environ λ=7mW/mK, donc reste très performante, mais se dégrade très rapidement en cas d'augmentation, même légère, de la pression.

## Revendications

1. Procédé d'isolation thermique de l'espace annulaire (4) d'un élément d'un ensemble (1) de deux conduites coaxiales (2, 3) dont l'espacement est assuré de préférence par des éléments centraliseurs (21), avec un matériau isolant thermique poreux (5), confiné sous pression absolue réduite de gaz **caractérisé en ce que** :
a/ on dispose ledit élément de conduites (1) incliné, de préférence d'un angle α de 5 à 30°, le dit espace annulaire étant fermé à chaque extrémité par une pièce de fermeture (13a, 13b), la pièce de fermeture à l'extrémité supérieure (13a) comprenant un orifice de remplissage (12) obturable (12a) et
b/ on remplit sensiblement intégralement l'espace annulaire (4) de dit matériau isolant (5) sous forme de particules en vrac, de préférence sous forme granulaire, en le déversant dans le dit orifice de remplissage de la pièce de fermeture à l'extrémité la plus haute dudit élément de conduites incliné, le dit espace annulaire étant maintenu sous vide poussé pendant le remplissage.

2. Procédé selon la revendication 1, **caractérisé en ce que** à l'étape b/ on déverse ledit matériau isolant (5) depuis un premier réservoir (10) dans lequel on a réalisé un vide poussé en tirant au vide à travers un orifice muni d'une première vanne d'isolation étanche (10a) dudit réservoir, et lesdites particules de matériau isolant (5) sont véhiculées par l'intermédiaire d'une première conduite flexible (11) entre ledit premier réservoir (10) et le dit orifice de remplissage (12) d'une pièce de fermeture (13a) de l'espace annulaire à l'extrémité supérieure de l'élément de conduites incliné, et avant le remplissage dudit espace annulaire et pendant ledit remplissage, on tire au vide celui-ci à travers un orifice muni d'une deuxième vanne d'isolation étanche (10b) communiquant avec ladite première conduite flexible (11).

3. Procédé selon la revendication 2, **caractérisé en ce que** ladite première conduite flexible (11) est reliée à une chambre de remplissage (14), celle-ci étant solidaire de ladite pièce de fermeture (13a), au niveau dudit orifice de remplissage (12), ladite chambre de remplissage (14) présentant de préférence à sa base une forme d'entonnoir évasé vers le haut, et on tire au vide ladite chambre de remplissage (14), ladite chambre de remplissage (14) renfermant en outre un dispositif de manutention (15) d'un bouchon (12a) permettant l'obturation dudit orifice de remplissage (12) après remplissage.

4. Procédé selon l'une quelconque des revendications 2 ou 3, **caractérisé en ce que** ledit premier réservoir (10) communique à sa base avec une chambre de séparation (16) de préférence équipée en partie haute d'un déflecteur (16a) en forme d'entonnoir renversé évasé vers le bas, destiné à séparer les particules de dit matériau isolant les unes des autres, lesdites particules se dirigeant par simple gravité vers un orifice inférieur (16b) en forme d'entonnoir évasé vers le haut, qui communique avec ladite conduite flexible (11), ladite chambre de séparation (16) comprenant un orifice muni d'une deuxième vanne étanche (10b), permettant de tirer au vide ladite chambre de séparation, ladite première conduite flexible (11), le cas échéant ladite chambre de remplissage (14), ainsi que ledit espace annulaire (4) dudit élément de conduite, qui lui sont reliés.

5. Procédé selon la revendication 4, **caractérisé en ce que** l'on réalise les étapes successives suivantes :
1/ on tire au vide à un niveau de vide poussé, de préférence inférieur à 10000 Pa, de préférence encore inférieur à 100 Pa :
- ledit premier réservoir à travers ledit orifice muni d'une première vanne d'isolation étanche (10a), et
- le volume interne de ladite chambre de séparation (16), de ladite première conduite flexible (11), de ladite chambre de remplissage (14) et dudit espace annulaire (4), et à travers ledit orifice (10a) dudit premier réservoir (10), puis
2/ on ouvre un orifice inférieur muni d'une troisième vanne d'isolation (10c) intercalé entre ledit premier réservoir (10) et ladite chambre de séparation (16), de manière à mettre en communication l'intérieur dudit premier réservoir (10) et de ladite chambre de séparation (16), lorsque ceux-ci se trouvent sensiblement au même dit niveau de vide poussé, puis
3/ on obture ledit orifice de remplissage (12) depuis l'intérieur de ladite chambre de remplissage (14), une fois que ledit espace annulaire (4) est rempli de matériau isolant (5).

6. Procédé selon l'une quelconque des revendications 3 à 5, **caractérisé en ce que** l'on mélange des particules de getter (17) aux particules de dit matériau isolant (5), par l'intermédiaire d'un deuxième réservoir (18) rempli de particules de getter, équipé d'un orifice muni d'une quatrième vanne d'isolation étanche de tirage au vide (18a), ledit deuxième réservoir (18) coopérant par l'intermédiaire d'une cinquième vanne d'isolation étanche (18b) en partie basse, avec une deuxième conduite flexible (9), assurant la liaison avec ladite chambre de remplissage (14), ledit deuxième réservoir (18) étant maintenu au même niveau de vide poussé pendant toute la durée du remplissage, le remplissage se faisant par simple gravité, par ouverture de ladite cinquième vanne d'isolation étanche (18b).

7. Procédé selon la revendication 6, **caractérisé en ce que** ledit getter est mélangé de manière continue ou discontinue par simple ouverture de ladite cinquième vanne d'isolation étanche (18b), de manière à être réparti tout au long de la longueur dudit espace annulaire (4) dudit élément de conduites.

8. Procédé selon l'une quelconque des revendications 2 à 7, **caractérisé en ce que** ladite première conduite flexible (11) comprend un ressort interne en spirale apte à être mis en rotation pour améliorer l'entraînement des particules et empêcher la formation de bouchons de matériaux isolants à l'intérieur de ladite conduite.

9. Procédé selon l'une quelconque des revendications 1 à 8, **caractérisé en ce que** les particules de matériau isolant présentent des dimensions variables s'étendant sur une fourchette de 10 µm à 5 mm, de manière à ce que les particules de plus petites dimensions puissent se loger dans les espaces interstitiels entre les particules de plus grandes dimensions.

10. Procédé selon la revendication 9, **caractérisé en ce que** les particules de matériau isolant sont des grains sphériques ou sensiblement sphériques, de préférence de 0,5 à 5 mm de diamètre.

11. Procédé selon l'une des revendications 9 ou 10, **caractérisé en ce que** ledit matériau isolant est un matériau microporeux ou nanoporeux, de préférence un aérogel, de préférence encore un aérogel de silice ou d'oxyde de titane.

12. Procédé selon l'une des revendications 1 à 11, **caractérisé en ce que** ledit élément de conduites est destiné à l'assemblage de conduites sous-marines en acier et présente une longueur de 10 à 100 mètres, de préférence d'environ 50 mètres, et les dites pièces de fermetures (13a, 13b) sont constituées chacune par une pièce forgée de jonction de révolution, destinée à la jonction de deux dits éléments (1) de conduites coaxiales bout à bout, et assurant la fermeture dudit espace annulaire à chaque extrémité dudit élément de conduite, ladite pièce de jonction située à l'extrémité supérieure dudit élément de conduites incliné, présentant un orifice (12) obturable sur sa paroi extérieure, permettant le remplissage dudit espace annulaire, à l'aide dudit matériau isolant.

13. Procédé selon la revendication 12 **caractérisé en ce que** ledit élément de conduites comporte à chaque extrémité une dite pièce forgée de révolution (13a, 13b) délimitée comme suit :
dans une direction radiale par rapport à un axe longitudinal XX' de révolution de ladite pièce, elle est délimitée par une paroi interne cylindrique (13₂) sensiblement de même diamètre que celui de la partie courante de ladite conduite interne (2), et par une paroi externe (13₁) cylindrique de diamètre sensiblement égal au diamètre externe de la partie courante de ladite conduite externe (3), et
dans la direction axiale longitudinale XX',
• du côté de ladite pièce de jonction destinée à être assemblée par soudage (29) à l'extrémité desdites conduites externe et interne d'un dit élément d'un ensemble d'au moins deux conduites coaxiales, lesdites parois externe (13₁) et interne (13₂) de ladite pièce de jonction forment en section longitudinale des premières branches respectivement externe (23₁) et interne (23₂) sensiblement de même épaisseur que lesdites conduites externe (3) et interne (2) auxquelles elles sont destinées à être assemblées, lesdites premières branches externe (23₁) et interne (23₂) délimitant une première cavité annulaire (24) et
• du côté opposé de ladite pièce de jonction destinée à être assemblée à une autre dite pièce de jonction, elle-même assemblée par soudage (29) à l'extrémité d'un autre élément d'ensemble de deux conduites coaxiales, lesdites parois externe (13₁) et interne (13₂) forment en section longitudinale des deuxièmes branches respectivement externe (25₁) et interne (25₂), délimitant une deuxième cavité annulaire (26),
• les fonds desdites première et deuxième cavités (24, 26) étant espacés dans ladite direction longitudinale XX', de manière à délimiter une zone pleine 30 de ladite pièce de jonction dans laquelle lesdites parois externe (13₁) et interne (13₂) forment les faces externe et interne d'une même paroi cylindrique.

14. Procédé selon l'une des revendications 1 à 13, **caractérisé en ce qu'**on agite au moins par intermittence lesdites particules de matériau isolant au fur et à mesure du remplissage de l'espace annulaire en faisant vibrer, de préférence verticalement, et/ou en faisant pivoter sur lui-même ledit élément de conduites en rotation angulaire par rapport à son axe longitudinal XX', afin de compacter le dit matériau isolant.

15. Procédé selon l'une des revendications 1 à 14, **caractérisé en ce que** ledit élément de conduites (1) est maintenu incliné par au moins une tour support (6₃) sur laquelle il repose, et de préférence il est supporté par au moins trois tours-supports (6₁, 6₂, 6₃) une tour support étant disposée respectivement à chaque extrémité et les autres étant réparties, de préférence de manière sensiblement régulière, entre les deux dites tours-supports d'extrémité.

16. Procédé selon les revendications 14 ou 15, **caractérisé en ce que** l'on réalise des rotations angulaires alternées d'amplitude 2β, de préférence de 10 à 90°, correspondant à des rotations d'un angle ± β de 5 à 45 degrés par rapport au plan axial vertical de l'élément de conduites.

17. Procédé selon la revendication 16, **caractérisé en ce que** l'on réalise lesdites rotations angulaires alternées à l'aide de roulettes motorisées (7) disposées transversalement à la direction longitudinale XX' dudit élément de conduites, en appui contre la paroi extérieure dudit élément de conduites, de part et d'autre de celle-ci, et sur lesquelles repose ledit élément de conduites, lesdites roulettes étant disposées au sommet de la (ou desdites) tour(s)-support(s).

18. Procédé selon l'une des revendications 14 à 17, **caractérisé en ce que** l'on réalise lesdites vibrations par des mouvements verticaux de montée et descente sur une amplitude de 1 à 50 cm de hauteur, impartis audit élément de conduites à l'aide d'un vérin (8) disposé au sommet de la (ou des) dite(s) tour(s)-support(s).

19. Procédé selon les revendications 14 à 18, **caractérisé en ce qu'**on réalise les étapes dans lesquelles :
- en début de remplissage, on fait vibrer ledit élément de conduites au niveau de son point d'appui sur la tour (6₁) support la plus basse et on le maintient fermement fixe au niveau des points d'appui au sommet des autres tours-supports (6₂, 6₃), et
- lorsque ledit remplissage a atteint environ le tiers de la longueur dudit élément de conduites, on fait vibrer ledit élément de conduite au niveau du sommet d'une tour-support (6₂) située sensiblement au milieu de sa longueur et on maintient fermement fixement ledit élément de conduite au niveau des tours-supports à chaque extrémité (6₁, 6₃), puis
- lorsque le remplissage a atteint environ les deux tiers de la longueur de l'élément de conduites, on fait vibrer ledit élément de conduites au niveau de son appui sur la tour-support (6₃) vers l'extrémité supérieure de l'élément de conduites incliné et on maintient fermement ledit élément de conduites au niveau des deux autres tours-supports (6₁, 6₂).

20. Procédé selon l'une quelconque des revendications 18 ou 19, **caractérisé en ce que** lesdits vérins (8) sont asservis avec un ordinateur, de manière à faire vibrer ledit élément de conduites à la fréquence propre de résonance dudit élément de conduites (1).

21. Procédé selon l'une quelconque des revendications 18 à 20, **caractérisé en ce que** ledit vérin (8) actionne une plateforme (9) supportant lesdites roulettes (7) sur lesquelles ledit élément de conduites vient en appui, et on réalise de façon alternée des vibrations et des rotations angulaires, de manière séquentielle ou simultanée.

22. Installation utile pour la mise en oeuvre d'un procédé selon l'une des revendications 1 à 21, **caractérisée en ce qu'**elle comprend :
- des moyens d'inclinaison d'un dit élément de conduite, comprenant de préférence des tours-supports telles que définies dans la revendication 15, et
- des moyens de tassement par vibration et/ou rotation en cours de remplissage, de préférence des moyens de vibration, à l'aide de vérins tels que définis dans l'une des revendications 18 à 21 et des moyens de rotation à l'aide de roulettes telles que définies dans les revendications 16 ou 17 et
- des moyens de remplissage comprenant :
. undit premier réservoir (10) et une dite première conduite flexible(11) telle que définie dans les revendications 2 à 5 ou 8, et
. des pompes à vide coopérant avec desdits orifices munis de vannes d'isolation étanche (10a, 10b), et
. de préférence, une dite chambre de remplissage (14), et une dite chambre de séparation (16) telles que définies dans l'une des revendications 4 ou 5, et
. de préférence, un dit deuxième réservoir (18) et une dite deuxième conduite flexible (19) tels que définis dans la revendication 6.

23. Elément de conduites coaxiales, isolé thermiquement à l'aide d'un matériau isolant poreux particulaire, rempli en vrac sous vide, de préférence à une pression inférieure à 10.000 Pa, de préférence encore inférieure à 100 Pa, à l'intérieur de son espace annulaire pouvant être obtenu par un procédé selon l'une quelconque des revendications 1 à 21.

24. Elément de conduites coaxiales suivant la revendication 23, **caractérisé en ce que** les dites particules présentent des dimensions s'étalant de 10 µm à 5 mm, de préférence de 0,5 à 5 mm, et le coefficient de remplissage de l'espace annulaire est supérieur à 0,85.

25. Elément de conduites coaxiales suivant la revendication 23 ou 24, **caractérisé en ce qu'**il comprend à chacune de ses extrémités une pièce de jonction de révolution, destinée à assurer la jonction entre deux éléments de conduites ainsi équipés bout à bout.

26. Elément de conduites selon l'une des revendications 23 à 25, **caractérisé en ce que** le matériau isolant est un matériau microporeux ou nanoporeux, de préférence un aérogel, se présentant sous forme de grains de 0,5 à 5 mm de diamètre.

27. Conduite comprenant des éléments de conduites selon l'une quelconque des revendications 23 à 26, assemblés bout à bout.

28. Conduite selon la revendication 27, **caractérisée en ce qu'**il s'agit d'une conduite sous-marine en acier.

29. Conduite selon la revendication 28, **caractérisée en ce qu'**il s'agit d'une conduite de liaison fond-surface, apte à assurer une liaison à grande profondeur, de préférence supérieure à 1 000 mètres.

## Claims

1. A method of thermally insulating the annular space (4) in an element of an assembly (1) of two coaxial pipes (2, 3), in which spacing is preferably provided by centralizer elements (21), the insulation being provided by a porous, thermally-insulating material (5) that is confined under small absolute gas pressure, the method being **characterized by**:
a/ placing said pipe elements (1) at an inclination, preferably at an angle α of 5° to 30°, said annular space being closed at each end by a closure piece (13a, 13b), the closure piece at the top end (13a) including a filler orifice (12) that is closable (12a); and
b/ substantially completely filling the annular space (4) with said insulating material (5) in the form of particles in bulk, preferably in granule form, by pouring the material into said filler orifice of the closure piece at the higher end of said inclined pipe elements, said annular space being maintained under a high vacuum throughout filling.

2. A method according to claim 1, **characterized in that** in step b/ said insulating material (5) is poured from a first reservoir (10) in which a high vacuum is established by evacuating through an orifice of said reservoir that is provided with a first leaktight isolation valve (10a), and said particles of insulating material (5) are conveyed via a first flexible hose (11) between said first reservoir (10) and said filler orifice (12) of a closure piece (13a) for closing the annular space at the top end of the inclined pipe elements, and before said annular space is filled and while said annular space is being filled, said annular space is itself evacuated via an orifice provided with a second leaktight isolation valve (10b) communicating with said first flexible hose (11).

3. A method according to claim 2, **characterized in that** said first flexible hose (11) is connected to a filler chamber (14), the filler chamber being secured to said closure piece (13a) at said filler orifice (12), said filler chamber (14) preferably presenting an upwardly-flared funnel shape at its base, with the filler chamber (14) being evacuated, said filler chamber (14) further containing a handling device (15) for handling a stopper (12a) enabling said filler orifice (12) to be closed after filling.

4. A method according to claim 2 or claim 3, **characterized in that** said first reservoir (10) communicates at its base with a separator chamber (16) preferably fitted in its top portion with a deflector (16a) in the form of a downwardly-flared upside-down funnel, for separating the particles of said insulating material from one another, said particles traveling merely under gravity towards a bottom orifice (16b) in the form of an upwardly-flared funnel in communication with said flexible hose (11), said separator chamber (16) including an orifice provided with a second leaktight valve (10b) serving to evacuate said separator chamber, said first flexible hose (11), where appropriate said filler chamber (14), and also said annular space (4) of said pipe element, which are connected thereto.

5. A method according to claim 4, **characterized in that** the following successive steps are performed:
1/ evacuating to a high vacuum, preferably less than 10,000 Pa, more preferably less than 100 Pa:
- said first reservoir via said orifice provided with a first leaktight isolation valve (10a); and
- the inside volumes of said separator chamber (16), of said first flexible hose (11), of said filler chamber (14), and of said annular space (4) through said orifice (10a) of said first reservoir (10); then
2/ opening a bottom orifice provided with a third isolation valve (10c) interposed between said first reservoir (10) and said separator chamber (16) in such a manner as to put the inside of said first reservoir (10) into communication with said separator chamber (16) when they are at substantially the same high level of vacuum; and then
3/ closing said filler orifice (12) from the inside of said filler chamber (14) once said annular space (4) is full of insulating material (5).

6. A method according to any one of claims 3 to 5, **characterized in that** particles of getter material (17) are mixed in with the particles of said insulating material (5) via a second reservoir (18) filled with particles of getter material and fitted with an orifice having a fourth leaktight isolation valve (18a) for evacuation purposes, said second reservoir (18) co-operating via a fifth leaktight isolation valve (18b) in its bottom portion with a second flexible hose (9) providing a connection with said filler chamber (14), said second reservoir (18) being maintained at the same high level of vacuum throughout the filling operation, filling taking place merely under gravity by opening said fifth leaktight isolation valve (18b).

7. A method according to claim 6, **characterized in that** said getter material is mixed continuously or discontinuously merely by opening said fifth leaktight isolating valve (18b), thereby spreading getter material all along the length of said annular space (4) of said pipe element.

8. A method according to any one of claims 2 to 7, **characterized in that** said first flexible hose (11) includes an internal spiral spring suitable for being set into rotation in order to improve the drive of particles and prevent plugs of insulating material forming inside said hose.

9. A method according to any one of claims 1 to 8, **characterized in that** the particles of insulating material present varying dimensions lying in a range 10 µm to 5 mm, so that the particles of the smallest dimensions can occupy interstitial spaces between particles of larger dimensions.

10. A method according to claim 9, **characterized in that** the particles of insulating material are spherical or substantially spherical grains, preferably having a diameter of 0.5 mm to 5 mm.

11. A method according to claim 9 or claim 10, **characterized in that** said insulating material is a microporous or nanoporous material, preferably an aerogel, more preferably a silica or titanium oxide aerogel.

12. A method according to one of claims 1 to 11, **characterized in that** said pipe element is for use in assembling undersea steel pipes and presents a length lying in the range 10 m to 100 m, preferably about 50 m, and each of said closure pieces (13a, 13b) is constituted by a circularly symmetrical junction forging for joining two of said coaxial pipe elements (1) together end-to-end, and serving to close said annular space at each end of said pipe element, said junction piece situated at the top end of said inclined pipe elements presenting a closable orifice (12) in its outside wall, enabling said annular space to be filled with said insulating material.

13. A method according to claim 12, **characterized in that** said pipe element includes at each of its ends a respective circularly symmetrical forging (13a, 13b) defined as follows:
in a radial direction relative to a longitudinal axis XX' of symmetry of said forging, it is defined by a cylindrical inside wall (13₂) having substantially the same diameter as the main portion of said inner pipe (2), and by a cylindrical outside wall (13₁) having a diameter substantially equal to the outside diameter of the main portion of said outer pipe (3); and
in the axial direction of the longitudinal axis XX':
• at the end of said junction forging for being assembled by welding (29) to the ends of said outer and inner pipes of a said element of an assembly of at least two coaxial pipes, said outside and inside walls (13₁, 13₂) of said junction forging forming in longitudinal section respective outer and inner first branches (23₁, 23₂) of substantially the same thickness as said outer and inner pipes (3, 2) to which they are to be assembled, said outer and inner first branches (23₁, 23₂) defining a first annular cavity (24); and
• at the opposite end of said junction forging for assembly to another said junction forging, itself assembled by being welded (29) to the end of another element of an assembly of two coaxial pipes, said outside and inside walls (13₁, 13₂) forming in longitudinal section respective outer and inner second branches (25₁, 25₂) defining a second annular cavity (26); and
• the bottoms of said first and second cavities (24, 26) being spaced apart in said longitudinal direction XX' in such a manner as to define a solid zone (30) of said junction forging in which said outside and inside walls (13₁, 13₂) form the outer and inner faces of a single cylindrical wall.

14. A method according to one of claims 1 to 13, **characterized in that** said particles of insulating material are shaken at least intermittently while the annular space is being filled by causing said pipe element to vibrate, preferably vertically, and/or by causing it to pivot in angular rocking about its longitudinal axis XX' in order to compact said insulating material.

15. A method according to one of claims 1 to 14, **characterized in that** said pipe element (1) is held in an inclined position by at least one support tower (6₃) on which it rests, and it is preferably supported by at least three support towers (6₁, 6₂, 6₃), one support tower being disposed respectively at each of its ends and the other towers being distributed, preferably in substantially regular manner, between said two end support towers.

16. A method according to claim 14 or claim 15, **characterized in that** pivoting is performed in back-and-forth angular rocking through an amplitude 2β, preferably lying in the range 10° to 90°, corresponding to turning through an angle of ± β of 5° to 45° relative to the vertical axial plane of the pipe element.

17. A method according to claim 16, **characterized in that** said back-and-forth angular rocking is implemented by means of motor-driven wheels (7) disposed transversely to the longitudinal direction XX' of said pipe element and bearing against the outside wall of said pipe element, on either side thereof, and on which said pipe element rests, said wheels being disposed at the top(s) of said support tower(s).

18. A method according to one of claims 14 to 17, **characterized in that** said vibration is implemented as vertical up and down movements over an amplitude of 1 cm to 50 cm in height, said movements being imparted to said pipe element by means of one or more jacks (8) disposed at the top(s) of said support tower(s).

19. A method according to claims 14 to 18, **characterized in that** the following steps are performed:
- at the beginning of filling, said pipe element is made to vibrate at its point bearing on the lowest support tower (6₁), and it is held firmly stationary at its bearing points on the tops of the other support towers (6₂, 6₃); and
- when said filling has reached about one-third of the length of said pipe element, said pipe element is caused to vibrate at the top of a support tower (6₂) situated substantially in the middle of its length, and said pipe element is maintained stationary on the support towers at each end (6₁, 6₃); and then
- when filling has reached about two-thirds of the length of the pipe element, said pipe element is caused to vibrate at its bearing point on the support tower (6₃) towards the top end of the inclined pipe element, and said pipe element is held firmly to the other two support towers (6₁, 6₂).

20. A method according to claim 18 or claim 19, **characterized in that** said jacks (8) are servo-controlled by a computer, so as to cause said pipe element to vibrate at the resonant frequency of said pipe element (1).

21. A method according to one of claims 18 to 20, **characterized in that** said jack (8) actuates a platform (9) supporting said wheels (7) on which said pipe element rests, and vibration and angular pivoting is implemented back and forth, either sequentially or simultaneously.

22. An installation for use in implementing a method according to any one of claims 1 to 21, the installation being **characterized in that** it comprises:
- means for inclining a said pipe element, preferably comprising support towers as defined in claim 15; and
- means for compacting by vibration and/or rocking during filling, preferably vibrator means using jacks as defined in one of claims 18 to 21 and rotary drive means using wheels as defined in claim 16 or claim 17; and
- filler means comprising:
■ a said first reservoir (10) and a said first flexible hose (11) as defined in claims 2 to 5 or 8; and
■ vacuum pumps co-operating with said orifices that are provided with leaktight isolation valves (10a, 10b); and
■ preferably a said filler chamber (14), and a said separator chamber (16) as defined in claim 4 or claim 5; and
■ preferably a said second reservoir (18) and a said second flexible hose (19) as defined in claim 6.

23. A coaxial pipe element that is thermally insulated with a particulate porous insulating material that is filled into the inside of the annular space under a vacuum, preferably at a pressure of less than 10,000 Pa, more preferably of less than 100 Pa, as can be obtained by a method according to any one of claims 1 to 21.

24. A coaxial pipe element according to claim 23, **characterized in that** said particles present dimensions lying in the range 10 µm to 5 mm, preferably in the range 0.5 mm to 5 mm, and the filling coefficient of the annular space is greater than 0.85.

25. A coaxial pipe element according to claim 23 or claim 24, **characterized in that** it includes a circularly symmetrical junction piece at each of its ends for joining two pipe elements fitted therewith together, end-to-end.

26. A pipe element according to one of claims 23 to 25, **characterized in that** the insulating material is a microporous or nanoporous material, preferably an aerogel, in the form of grains having a diameter of 0.5 mm to 5 mm.

27. A pipe comprising pipe elements according to any one of claims 23 to 26, assembled end-to-end.

28. A pipe according to claim 27, **characterized in that** it is an undersea pipe made of steel.

29. A pipe according to claim 28, **characterized in that** it is a bottom-to-surface connection pipe suitable for providing a connection in great depth, preferably greater than 1000 m.

## Patentansprüche

1. Verfahren zur Wärmeisolierung des ringförmigen Raums (4) eines Elements einer Anordnung (1) aus zwei koaxialen Rohrleitungen (2, 3), deren Abstand voneinander vorzugsweise durch Zentrierelemente (21) sichergestellt ist, mit einem porösen Wärmeisoliermaterial (5), das unter reduziertem absoluten Gasdruck eingeschlossen ist, **dadurch gekennzeichnet, daß**:
a/ das Rohrleitungselement (1) geneigt angeordnet wird, vorzugsweise unter einem Winkel α zwischen 5 und 30°, wobei der ringförmige Raum an jedem Ende durch ein Verschlußteil (13a, 13b) verschlossen ist, wobei das Verschlußteil an dem oberen Ende (13a) eine verschließbare (12a) Füllöffnung (12) umfaßt, und
b/ der ringförmige Raum (4) im wesentlichen vollständig mit Isoliermaterial (5) in Form loser Teilchen, vorzugsweise in Granulatform, **dadurch** gefüllt wird, daß dieses in die Füllöffnung des Verschlußteils am obersten Ende des geneigten Rohrleitungselements gekippt wird, wobei der ringförmige Raum während des Befüllens unter Hochvakuum gehalten wird.

2. Verfahren nach Anspruch 1, **dadurch gekennzeichnet, daß** bei Schritt b/ das Isoliermaterial (5) aus einem ersten Behälter (10) gekippt wird, in dem ein Hochvakuum **dadurch** hergestellt wurde, daß über eine Öffnung, die mit einem ersten Ventil zum dichten Absperren (10a) des Behälters ausgestattet ist, evakuiert wurde, und die Isoliermaterialteilchen (5) über einen ersten Schlauch (11) zwischen dem ersten Behälter (10) und der Füllöffnung (12) eines Verschlußteils (13a) des ringförmigen Raums am oberen Ende des geneigten Rohrleitungselements transportiert werden, und vor dem Befüllen des ringförmigen Raums sowie während des Befüllens dieser über eine Öffnung, die mit einem mit dem ersten Schlauch (11) in Verbindung stehenden zweiten Ventil zum dichten Absperren (10b) ausgestattet ist, evakuiert wird.

3. Verfahren nach Anspruch 2, **dadurch gekennzeichnet, daß** der erste Schlauch (11) mit einer Füllkammer (14) verbunden ist, wobei diese im Bereich der Füllöffnung (12) fest mit dem Verschlußteil (13a) verbunden ist, wobei die Füllkammer (14) vorzugsweise an ihrem unteren Teil die Form eines nach oben erweiterten Trichters aufweist, und die Füllkammer (14) evakuiert wird, wobei die Füllkammer (14) ferner eine Vorrichtung zum Bedienen (15) eines Verschlußstopfens (12a) umfaßt, der das Verschließen der Füllöffnung (12) nach dem Befüllen ermöglicht.

4. Verfahren nach einem der Ansprüche 2 oder 3, **dadurch gekennzeichnet, daß** der erste Behälter (10) an seinem unteren Teil mit einer Trennkammer (16) in Verbindung steht, die vorzugsweise im oberen Teil mit einer Ablenkeinrichtung (16a) in Form eines umgekehrten, nach unten erweiterten Trichters ausgestattet ist, welche dazu bestimmt ist, die Isoliermaterialteilchen voneinander zu trennen, wobei die Teilchen sich durch einfache Schwerkraft in Richtung einer unteren Öffnung (16b) in Form eines nach oben erweiterten Trichters bewegen, die mit dem Schlauch (11) in Verbindung steht, wobei die Trennkammer (16) eine Öffnung aufweist, die mit einem zweiten dichten Ventil (10b) ausgestattet ist, das ermöglicht, die Trennkammer, den ersten Schlauch (11), gegebenenfalls die Füllkammer (14) sowie den ringförmigen Raum (4) des Rohrleitungselements, die mit ihr verbunden sind, zu evakuieren.

5. Verfahren nach Anspruch 4, **dadurch gekennzeichnet, daß** die folgenden aufeinanderfolgenden Schritte durchgeführt werden:
1/ Evakuieren
- des ersten Behälters über die mit einem ersten Ventil zum dichten Absperren (10a) ausgestattete Öffnung, und
- des Innenraums der Trennkammer (16), des ersten Schlauchs (11), der Füllkammer (14) und des ringförmigen Raums (4) über die Öffnung (10a) des ersten Behälters (10)
auf einen Hochvakuumpegel, vorzugsweise von unter 10.000 Pa, weiterhin vorzugsweise von unter 100 Pa, dann
2/ Öffnen einer unteren Öffnung, die mit einem dritten Absperrventil (10c) ausgestattet ist, das zwischen dem ersten Behälter (10) und der Trennkammer (16) zwischengeschaltet ist, so daß der Innenraum des ersten Behälters (10) und der der Trennkammer (16) miteinander verbunden werden, wenn ihr Hochvakuumpegel im wesentlichen der gleiche ist, anschließend
3/ Verschließen der Füllöffnung (12) von der Innenseite der Füllkammer (14) aus, sobald der ringförmige Raum (4) mit Isoliermaterial (5) gefüllt ist.

6. Verfahren nach einem der Ansprüche 3 bis 5, **dadurch gekennzeichnet, daß** Getterteilchen (17) mittels eines zweiten Behälters (18), der mit Getterteilchen gefüllt und mit einer mit einem vierten dichten Absperrventil zum Evakuieren (18a) ausgestatteten Öffnung versehen ist, mit den Isoliermaterialteilchen (5) gemischt werden, wobei der zweite Behälter (18) über ein fünftes Ventil zum dichten Absperren (18b) im unteren Teil mit einem zweiten Schlauch (9) in Verbindung steht, der die Verbindung mit der Füllkammer (14) sicherstellt, wobei der zweite Behälter (18) über die gesamte Fülldauer auf dem gleichen Hochvakuumniveau gehalten wird, wobei das Befüllen durch einfache Schwerkraft, durch Öffnen des fünften Ventils zum dichten Absperren (18b) erfolgt.

7. Verfahren nach Anspruch 6, **dadurch gekennzeichnet, daß** das Getter kontinuierlich oder diskontinuierlich durch einfaches Öffnen des fünften Ventils zum dichten Absperren (18b) gemischt wird, so daß es entlang der gesamten Länge des ringförmigen Raums (4) des Rohrleitungselements verteilt wird.

8. Verfahren nach einem der Ansprüche 2 bis 7, **dadurch gekennzeichnet, daß** der erste Schlauch (11) eine innenliegende Spiralfeder aufweist, die geeignet ist, in Rotation versetzt zu werden, um das Vorwärtsbewegen der Teilchen zu verbessern und um die Bildung von Isoliermaterialstaus innerhalb der Rohrleitung zu vermeiden.

9. Verfahren nach einem der Ansprüche 1 bis 8, **dadurch gekennzeichnet, daß** die Isoliermaterialteilchen veränderliche Größen in einem Bereich von 10 µm bis 5 mm aufweisen, so daß die kleineren Teilchen sich in den Zwischenräumen zwischen den größeren Teilchen einlagern können.

10. Verfahren nach Anspruch 9, **dadurch gekennzeichnet, daß** die Isoliermaterialteilchen kugelförmige oder im wesentlichen kugelförmige Körner, vorzugsweise mit einem Durchmesser zwischen 0,5 und 5 mm sind.

11. Verfahren nach einem der Ansprüche 9 oder 10, **dadurch gekennzeichnet, daß** das Isoliermaterial ein mikroporöses oder nanoporöses Material, vorzugsweise ein Aerogel, weiterhin vorzugsweise ein Silica- oder Titanoxid-Aerogel ist.

12. Verfahren nach einem der Ansprüche 1 bis 11, **dadurch gekennzeichnet, daß** das Rohrleitungselement für die Verbindung von Unterwasserrohrleitungen aus Stahl bestimmt ist und eine Länge zwischen 10 und 100 Metern, vorzugsweise von etwa 50 Metern aufweist, und die Verschlußteile (13a, 13b) jeweils von einem geschmiedeten Rotationsverbindungsteil gebildet sind, welches für das stumpfe Verbinden von zwei Elementen (1) aus koaxialen Rohrleitungen bestimmt ist und das Verschließen des ringförmigen Raums an jedem Ende des Rohrleitungselements sicherstellt, wobei das Verbindungsteil, das sich am oberen Ende des geneigten Rohrleitungselements befindet, eine an dessen Außenwand verschließbare Öffnung (12) aufweist, die das Befüllen des ringförmigen Raums mit Hilfe des Isoliermaterials ermöglicht.

13. Verfahren nach Anspruch 12, **dadurch gekennzeichnet, daß** das Rohrleitungselement an jedem Ende ein Rotationsschmiedeteil (13a, 13b) umfaßt, das wie folgt begrenzt ist:
- in einer radialen Richtung zu einer Rotationslängsachse XX' des Teils ist es durch eine zylindrische Innenwand (13₂), die im wesentlichen den gleichen Durchmesser wie der durchgehende Teil der inneren Rohrleitung (2) aufweist, und durch eine zylindrische Außenwand (13₁), deren Durchmesser im wesentlichen gleich dem Außendurchmesser des durchgehenden Teils der äußeren Rohrleitung (3) ist, begrenzt, und
- in der axialen Längsrichtung XX',
- auf der Seite des Verbindungsteils, das dazu bestimmt ist, an dem Ende der äußeren und inneren Rohrleitungen eines Elements einer Anordnung aus wenigstens zwei koaxialen Rohrleitungen angeschweißt (29) zu werden, bilden die Außenwand (13₁) und die Innenwand (13₂) des Verbindungsteils im Längsschnitt einen ersten äußeren Schenkel (23₁) bzw. einen ersten inneren Schenkel (23₂) mit im wesentlichen gleicher Dicke wie die äußere Rohrleitung (3) und die innere Rohrleitung (2), mit denen sie verbunden werden sollen, wobei der erste äußere Schenkel (23₁) und der erste innere Schenkel (23₂) einen ersten ringförmigen Hohlraum (24) begrenzen, und
- auf der gegenüberliegenden Seite des Verbindungsteils, das dazu bestimmt ist, mit einem weiteren Verbindungsteil verbunden zu werden, das seinerseits an dem Ende eines weiteren Elements einer Anordnung aus zwei koaxialen Rohrleitungen angeschweißt (29) ist, bilden die Außenwand (13₁) und die Innenwand (13₂) im Längsschnitt einen zweiten äußeren Schenkel (25₁) bzw. einen zweiten inneren Schenkel (25₂), die einen zweiten ringförmigen Hohlraum (26) begrenzen,
- wobei die Böden des ersten und des zweiten Hohlraums (24, 26) in der Längsrichtung XX' derart voneinander beabstandet sind, daß ein massiver Bereich (30) des Verbindungsteils begrenzt wird, in dem die Außenwand (13₁) und die Innenwand (13₂) die Außen- und Innenflächen einer gleichen zylindrischen Wand bilden.

14. Verfahren nach einem der Ansprüche 1 bis 13, **dadurch gekennzeichnet, daß** die Isoliermaterialteilchen entsprechend des Befüllens des ringförmigen Raums mit Unterbrechungen geschüttelt werden, und zwar **dadurch**, daß man das Rohrleitungselement - vorzugsweise vertikal - vibrieren läßt und/oder daß man es eine Winkeldrehung um sich selbst gegenüber seiner Längsachse XX' ausführen läßt, um das Isoliermaterial zu verdichten.

15. Verfahren nach einem der Ansprüche 1 bis 14, **dadurch gekennzeichnet, daß** das Rohrleitungselement (1) durch wenigstens einen Tragturm (6₃), an dem es aufliegt, geneigt gehalten wird, und es vorzugsweise von wenigstens drei Tragtürmen (6₁, 6₂, 6₃) getragen wird, wobei ein Tragturm jeweils an jedem Ende angeordnet ist und die anderen - vorzugsweise im wesentlichen gleichmäßig - zwischen den beiden endseitigen Tragtürmen verteilt sind.

16. Verfahren nach den Ansprüchen 14 oder 15, **dadurch gekennzeichnet, daß** hin- und hergehende Winkeldrehungen mit einem Ausschlag 2β, vorzugsweise zwischen 10 und 90° bewirkt werden, was Drehungen mit einem Winkel ± β zwischen 5 und 45 Grad gegenüber der vertikalen Axialebene des Rohrleitungselements entspricht.

17. Verfahren nach Anspruch 16, **dadurch gekennzeichnet, daß** die hin- und hergehenden Winkeldrehungen mit Hilfe motorisierter Rollen (7) bewirkt werden, die quer zur Längsrichtung XX' des Rohrleitungselements, in Anlage an der Außenwand des Rohrleitungselements, auf deren beiden Seiten angeordnet sind und auf denen das Rohrleitungselement aufliegt, wobei die Rollen an der Spitze des (oder der) Tragturms (Tragtürme) angeordnet sind.

18. Verfahren nach einem der Ansprüche 14 bis 17, **dadurch gekennzeichnet, daß** die Vibrationen durch vertikale Auf- und Abwärtsbewegungen über einen Bereich mit einer Höhe von 1 bis 50 cm, die mit Hilfe eines an der Spitze des (oder der) Tragturms (Tragtürme) angeordneten Zylinders (8) auf das Rohrleitungselement übertragen werden, bewirkt werden.

19. Verfahren nach den Ansprüchen 14 bis 18, **dadurch gekennzeichnet, daß** die folgenden Schritte durchgeführt werden, bei denen:
- man zu Beginn des Befüllens das Rohrleitungselement im Bereich seines Anlagepunktes an dem untersten Tragturm (6₁) vibrieren läßt und es im Bereich der Anlagepunkte an der Spitze der anderen Tragtürme (6₂, 6₃) ganz fest hält, und
- wenn die Füllung etwa das Drittel der Länge des Rohrleitungselements erreicht hat, man das Rohrleitungselement im Bereich der Spitze eines im wesentlichen in der Mitte seiner Länge befindlichen Tragturms (6₂) vibrieren läßt und das Rohrleitungselement im Bereich der Tragtürme (6₁, 6₃) an jedem Ende ganz fest hält, dann
- wenn die Füllung etwa zwei Drittel der Länge des Rohrleitungselements erreicht hat, man das Rohrleitungselement im Bereich seiner Anlage an dem Tragturm (6₃) zum oberen Ende des geneigten Rohrleitungselements vibrieren läßt und das Rohrleitungselement im Bereich der beiden anderen Tragtürme (6₁, 6₂) ganz fest hält.

20. Verfahren nach einem der Ansprüche 18 oder 19, **dadurch gekennzeichnet, daß** die Zylinder (8) mit einem Computer gesteuert werden, um das Rohrleitungselement mit der Eigenresonanzfrequenz des Rohrleitungselements (1) vibrieren zu lassen.

21. Verfahren nach einem der Ansprüche 18 bis 20, **dadurch gekennzeichnet, daß** der Zylinder (8) eine Plattform (9) betätigt, welche die Rollen (7) trägt, auf denen das Rohrleitungselement zur Anlage kommt, und daß alternierend Vibrationen und Winkeldrehungen sequentiell oder gleichzeitig bewirkt werden.

22. Anlage für die Durchführung eines Verfahrens nach einem der Ansprüche 1 bis 21, **dadurch gekennzeichnet, daß** sie folgendes umfaßt:
- Mittel zum Neigen eines Rohrleitungselements, die vorzugsweise Tragtürme umfassen, wie sie in Anspruch 15 definiert sind, und
- Mittel zum Verdichten durch Vibration und/oder Rotation im Laufe des Befüllens, vorzugsweise Vibrationsmittel, mit Hilfe von Zylindern wie sie in einem der Ansprüche 18 bis 21 definiert sind, sowie Rotationsmittel mit Hilfe von Rollen wie sie in den Ansprüchen 16 oder 17 definiert sind, und
- Füllmittel, die folgendes umfassen:
- einen ersten Behälter (10) und einen ersten Schlauch (11) wie er in den Ansprüchen 2 bis 5 oder 8 definiert ist, und
- Vakuumpumpen, die mit Öffnungen zusammenwirken, welche mit Ventilen zum dichten Absperren (10a, 10b) versehen sind, sowie
- vorzugsweise eine Füllkammer (14) sowie eine Trennkammer (16), wie sie in einem der Ansprüche 4 oder 5 definiert sind, und
- vorzugsweise einen zweiten Behälter (18) und einen zweiten Schlauch (19), wie sie in Anspruch 6 definiert sind.

23. Element aus koaxialen Rohrleitungen, das mit Hilfe eines porösen, teilchenförmigen Isoliermaterials, welches lose unter Vakuum, vorzugsweise unter einem Druck von weniger als 10.000 Pa, weiterhin vorzugsweise von weniger als 100 Pa in dessen ringförmigen Raum eingefüllt wird, wärmeisoliert ist, was mittels eines Verfahrens nach einem der Ansprüche 1 bis 21 erzielt werden kann.

24. Element aus koaxialen Rohrleitungen nach Anspruch 23, **dadurch gekennzeichnet, daß** die Teilchen Größen in einem Bereich von 10 µm bis 5 mm, vorzugsweise zwischen 0,5 und 5 mm aufweisen, und der Füllfaktor des ringförmigen Raums über 0,85 liegt.

25. Element aus koaxialen Rohrleitungen nach Anspruch 23 oder 24, **dadurch gekennzeichnet, daß** es an jedem seiner Enden ein Rotationsverbindungsteil aufweist, das dazu bestimmt ist, das stumpfe Verbinden von zwei so ausgestatteten Rohrleitungselementen sicherzustellen.

26. Rohrleitungselement nach einem der Ansprüche 23 bis 25, **dadurch gekennzeichnet, daß** das Isoliermaterial ein mikroporöses oder nanoporöses Material, vorzugsweise ein Aerogel ist, das in Form von Körnern mit einem Durchmesser zwischen 0,5 und 5 mm vorliegt.

27. Rohrleitung, die stumpf miteinander verbundene Rohrleitungselemente nach einem der Ansprüche 23 bis 26 umfaßt.

28. Rohrleitung nach Anspruch 27, **dadurch gekennzeichnet, daß** es sich um eine Unterwasserrohrleitung aus Stahl handelt.

29. Rohrleitung nach Anspruch 28, **dadurch gekennzeichnet, daß** es sich um eine Rohrleitung zur Verbindung von Meeresgrund und Oberfläche handelt, die geeignet ist, eine Verbindung in großer Tiefe, vorzugsweise von mehr als 1.000 Metern sicherzustellen.
